(19) Europäisches Patentamt
European Patent Office
Office européen des brevets

(11) **EP 1 763 151 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(51) Int Cl.:
*H04B 7/04* *(2017.01)*    *H04B 7/08* *(2006.01)*

(21) Anmeldenummer: **06017706.0**

(22) Anmeldetag: **25.08.2006**

(54) **Antennendiversityanlage zum Funkempfang für Fahrzeuge**

Antenna diversity device for reception in vehicles

Système à diversité d'antennes pour la réception dans des vehicules

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.09.2005 DE 102005043304**
**21.08.2006 DE 102006039357**

(43) Veröffentlichungstag der Anmeldung:
**14.03.2007 Patentblatt 2007/11**

(73) Patentinhaber: **Fuba Automotive Electronics GmbH**
**31162 Bad Salzdetfurth (DE)**

(72) Erfinder: **Lindenmeier, Heinz**
**82152 Planegg (DE)**

(74) Vertreter: **Manitz Finsterwald Patentanwälte PartmbB**
**Postfach 31 02 20**
**80102 München (DE)**

(56) Entgegenhaltungen:
| | |
|---|---|
| EP-A1- 0 462 338 | EP-A1- 0 714 178 |
| EP-A1- 0 877 440 | EP-A2- 0 201 977 |
| EP-A2- 1 126 631 | DE-A1- 4 321 805 |
| JP-A- 2001 186 069 | US-A1- 2005 064 825 |
| US-B1- 6 281 838 | |

**Beschreibung**

Die Erfindung betrifft eine Antennendiversityanlage nach dem Oberbegriff des Anspruchs 1.

Antennendiversityanlagen mit einem Schaltdiversity dieser Art werden bevorzugt für den UKW-Rundfunkempfang eingesetzt und sind bekannt, z.B. auch aus DE 19607045. Weiterhin ist aus der EP1126631 ein Diversitystem bekannt, welches darauf abzielt, durch gleichphasige Überlagerung zweier oder auch mehrerer Antennensignale ein größeres Nutzsignal zu erzielen als mit einer Einzelantenne, um so im Gebiet mit Mehrwegeausbreitung die Wahrscheinlichkeit von Pegeleinbrüchen zu reduzieren. Damit ergibt sich im Summensignal ein in Bezug auf das Empfängerrauschen im Mittel günstigeres Signalrauschverhältnis. Die einwandfreie Wirkungsweise einer gleichphasigen Summation von Antennensignalen ist jedoch darauf beschränkt, dass die am Empfangsort sich überlagernden Teilwellen (Rayleigh-Empfangsfeld) sich in ihrer Momentanfrequenz nur unwesentlich unterscheiden, so dass sich daraus keine hörbaren Empfangsstörungen ergeben. In Empfangssituationen, wie sie z.B. in Fig. 1 in der EP1126631 dargestellt sind, bei denen sich Wellenbündel mit unterschiedlichen Laufzeiten $\tau_0$ bis $\tau_3$ am Empfangsort überlagern, sind die empfangenen Teilwellen nicht mehr gleichfrequent und führen durch die Überlagerung zu Frequenzstörhüben, die nach der Frequenzdemodulation während der Fahrt häufig zu spontan auftretenden Störungen führen. Die Wellenbündel mit den unterschiedlichen Laufzeiten überlagern sich am Empfangsort jeweils nach Maßgabe einer Rayleigh-Verteilung, welche sich bei den unterschiedlichen Antennen am Fahrzeug unterschiedlich auswirkt, so dass auch die Antennensignale zweier Diversityantennen am Fahrzeug insbesondere im Bereich des Pegelfadings unterschiedliche Momentanfrequenz besitzen können. Die Differenz dieser Frequenzen ist durch die Frequenzmodulation des hochfrequenten Trägers bedingt und ist in der Regel sehr groß und der daraus resultierende Phasenunterschied müsste durch ein Phasendrehglied in einem Signalpfad ausgeregelt werden, wenn das Signal im anderen Signalpfad keinen Frequenzstörhub besitzt. Andererseits würde bei schneller Phasenregelung ein im ersten Signalpfad gestörtes Signal durch den Regelvorgang seine Störung auf den zweiten Signalpfad aufprägen und somit die Störung im Summensignal erzwingen. Ein weiterer Nachteil eines reinen phasengeregelten Systems ist die Begrenzung auf zwei Antennensignale, so dass keine ausreichende diversitätsmäßige Wirkung mit diesem System zu erzielen ist. Auf ähnliche Weise wirken Nachbarkanalstörungen aufgrund einer begrenzten Selektion in der Zwischenfrequenzebene. Auch durch Intermodulation anderer UKW-Sender im Empfangskanal auftretende Signale bewirken in Verbindung mit Pegeleinbrüchen Frequenzhubstörungen auf dem Nutzsignal, welche mit dem Phasenregelsystem mit Gleichphasung nicht eliminiert werden können. Zur Verbesserung dieser Situation ist deshalb in der EP 1 126 631 in der die Mehrantennenanlage eine steuerbare logische Schalteinrichtung enthalten, bei der mit unterschiedlichen Schaltstellungen jeweils ein diversitätsmäßig unterschiedliches Empfangssignal an mindestens einen der beiden Eingänge der Empfangseinrichtung zugeführt ist und das summierte Signal einem Störungsdetektor zur extrem raschen Erkennung eines durch Frequenzstörhub gestörten Summensignals zugeführt ist, dessen Störungserkennungssignal bei Vorliegen einer Empfangsstörung die logische Schalteinrichtung in eine andere Schaltstellung weiterschaltet.

Die in der EP 1 126 631 angegebene Anordnung besitzt jedoch den verbleibenden Nachteil, dass im Falle des Auftretens von Gleichkanal- oder Nachbarkanalstörungen durch unerwünschte Rundfunksender - welche aufgrund der dichten Frequenzbelegung mit Sendern eine häufige Störungsursache bilden - die Pegelmaximierung durch Gleichphasung des gewünschten Signals die Störerscheinung in der Regel nicht beseitigt. Vielmehr ist es in solchen Situationen wichtig, das Verhältnis von Nutzsignal zu Störsignal zu verbessern. Führt die Wahl eines diversitätsmäßig unterschiedlichen Empfangssignals nicht zu einem störungsfreien Empfang, so kann die Gleichphasung des gewünschten Signals nicht zum Ziel führen, weil das störende Gleichkanal- oder Nachbarkanalsignal damit in aller Regel nicht unterdrückt wird. Das gleiche gilt bei Empfangssituationen, bei denen sich Wellenbündel mit größeren unterschiedlichen Laufzeiten am Empfangsort überlagern. Ein weiterer besonderer Nachteil der in der EP 1 126 631 angegebenen Anordnung besteht in der praktischen Umsetzung, welche bei kostengünstiger Realisierung erzwingt, dass die Phasenregeleinrichtung im Empfänger untergebracht ist und somit mindestens zwei getrennte Antennenleitungen zum Empfänger geführt werden müssen. Dies bedeutet im Automobilbau einen erhöhten Kosten- und Raumaufwand und wird dort auch bezüglich des Fahrzeughandlings als nachteilig eingestuft. Als weiterer Nachteil der Phasenregeleinrichtung ergibt sich im Rayleighfeld mit tiefen Signaleinbrüchen, welchen insbesondere bei schneller Fahrt die Regelung nicht folgen kann und diese neu einschwingen muss, wodurch eine unkontrollierte Phasensteuerung mit Störfrequenzhub eintritt. Dieser wiederum kann aufgrund der Frequenzdemodulation zu Störungen im Empfang führen. Besonders schwerwiegend für die Wirtschaftlichkeit der in der EP 1 126 631 angegeben Lösung ist jedoch der hohe materielle Aufwand, welcher sich in Folge der zweiten Hochfrequenzleitung zum Empfänger in Verbindung mit der Notwendigkeit ergibt, für die Diversityfunktion eine zweite Tunerschaltung im Empfänger zu benötigen.

Aus der EP 0 877 440 A1 ist ein Antennendiversitysystem für FM-, AM-, und TV-Empfang bekannt, welches die Richtwirkung einer Antennenanordnung im Betrieb ändert. Hierfür werden die Phasen verschiedener Antennensignale um einen voreingestellten Wert gedreht, bevor die Signale gemischt werden.

Die DE 43 21 805 A1 offenbart eine FM-Übertragungsantenneneinrichtung für Kraftfahrzeuge und eine TV-Übertragungsantenneneinrichtung für Kraftfahrzeuge.

Aufgabe der Erfindung ist es deshalb, bei einer Antennendiversityanlage nach dem Oberbegriff des Anspruchs 1, diese Nachteile zu vermeiden und eine sowohl kostengünstige als auch eine hoch effiziente Antennendiversityanlage zu gestalten.

Diese Aufgabe wird erfindungsgemäß durch die Merkmale des Anspruchs 1 gelöst.

Die mit der Erfindung erzielten Vorteile bestehen in der Hauptsache in der Schaffung einer besonders ökonomischen Antennendiversityanlage 2, 3 mit allen Vorteilen der gephasten Überlagerung von Antennensignalen im Hinblick auf ein gutes Signal-Störverhältnis auch bezüglich Gleichkanal- oder Nachbarkanalstörungen und den Vorteilen der Gestaltbarkeit für eine Vielzahl von Antennen bei gleichzeitig minimalem Kabelaufwand im Fahrzeug. Befindet sich das Antennendiversitymodul 6 z.B. in deren Nähe einer kompakten Mehrantennenanlage 2, wie zum Beispiel auf der Heckfensterscheibe eines Fahrzeugs, so wird bei einer Vielzahl von Antennen nur-eine Hochfrequenzleitung 4 zum Empfänger benötigt. Die Verbesserung des Signal-Störverhältnis bezüglich Gleichkanal- oder Nachbarkanalstörungen ist erfindungsgemäß nur mit der Abkehr von der gleichphasigen Summation von Antennensignalen zu erreichen. Besonders vorteilhaft kann diese Antennendiversityanlage 2,3 für den Rundfunkempfang im Auto und insbesondere für den UKW-Empfang eingesetzt werden. Die Zusammenfassung der Funktionen Antennenauswahl und Überlagerung der Signale mit in Schritten unterschiedlichen Phasen bzw. und in Schritten unterschiedlichen Pegelübertragungswerten in einer mit Antennendiversitymodul 6 bezeichneten, vom Empfänger getrennten Baueinheit, welche vorzugsweise in der Nähe einer Mehrantennenanlage 2 positioniert ist mit nur einer Verbindungsleitung zum Empfänger, ermöglicht ein für den Automobilbau sowohl kostengünstiges als auch bezüglich der Handhabung besonders attraktives Konzept.

Ausführungsbeispiele der Erfindung sind in folgenden Zeichnungen dargestellt. Es zeigen:

Fig. 1:
Ein Blockschema von einer Antennendiversityanlage 2,3 gemäß der Erfindung mit Mehrantennenanlage 2 mit Aufzweigung des eingangsseitigen Signalpfads 14a in einen ersten separaten Signalpfad 15 mit dem Empfangssignal 7a und einen zweiten separaten Signalpfad 16 mit dem Empfangssignal 7b mit einstellbarer Phasendreheinrichtung 10 und einem Summationsglied 9 und dem adressierbaren Signalwahlschalter 12, durch welchen über die im Empfänger 1 befindliche Auswerteschaltung 19 und über die elektronische Steuereinrichtung mit Speicher 11 jeweils Antennen ausgewählt sind. Die fest einstellbare Phasendreheinrichtung 10 kann vorteilhaft als adressierbares, digital einstellbares Phasendrehglied 28 und das Phasen-Einstellsignal 14 entsprechend als logisches Adresssignal gestaltet werden.

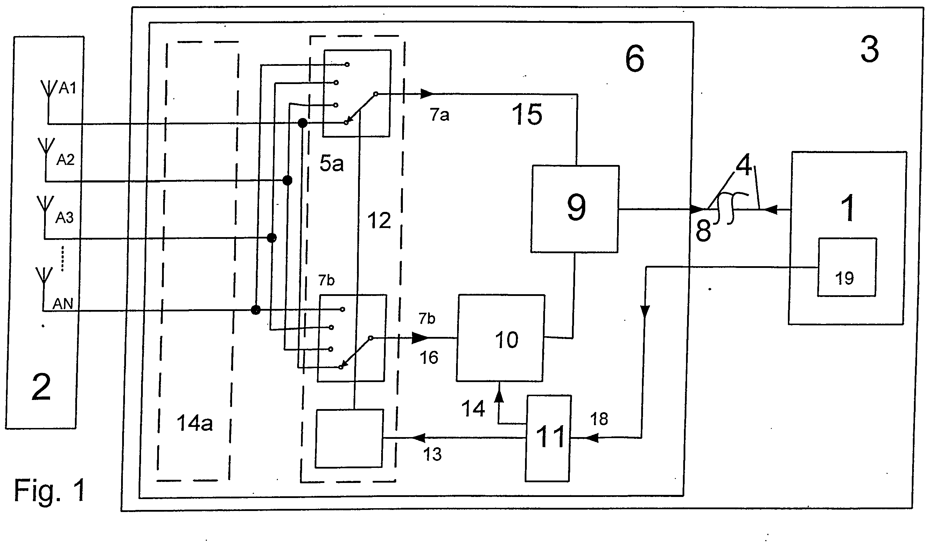

Fig. 2:
Antennendiversityanlage 2, 3 wie in Fig. 1, jedoch mit Diversityprozessor 17 im Antennendiversitymodul 6, wobei die Störungen im summierten Ausgangssignal 8 mit dem ZF-Signal 20 über die Hochfrequenzleitung 4 dem Diversityprozessor 17 zugeleitet sind

Fig. 3 :
Antennendiversityanlage 2, 3 wie in Fig. 1, jedoch mit Diversityprozessor 17 im Empfänger 1 und im Diversityprozessor 17 ein Adress-Wahlsignal 27 erzeugt ist, welches über die Hochfrequenzleitung 4 der elektronischen Steuereinrichtung mit Speicher 11 im Antennendiversitymodul 6 zugeführt ist.

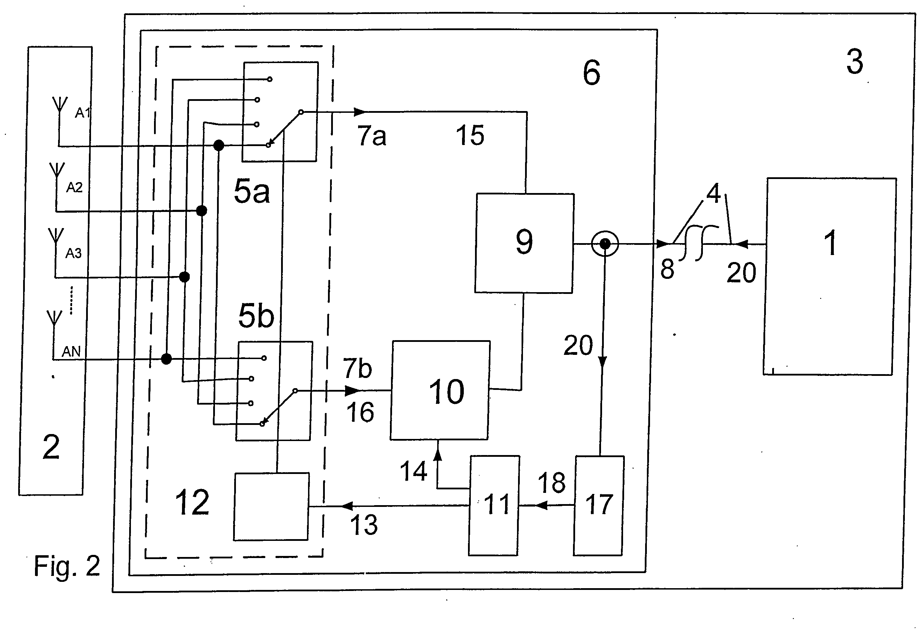

Fig. 4:
Antennendiversityanlage 2, 3 und Antennendiversitymodul 6 wie in Fig.2, jedoch mit Antennen mit aktiven Verstärkerelementen 25 in der Mehrantennenanlage 2 und als Dioden ausgeführter Auswahlschalter 5a, 5b, welcher auch Null-Schaltstellung 24a, 24b ermöglicht.

Fig. 5:
Mehrantennenanlage 2 und Antennendiversitymodul 6 wie in Fig.2, jedoch mit passiven Antennen und Antennenverstärker 21a, 21b im ersten Signalpfad 15 und im zweitem Signalpfad 16 jeweils mit hochohmigem Verstärkerfrontend 22a, 22b.

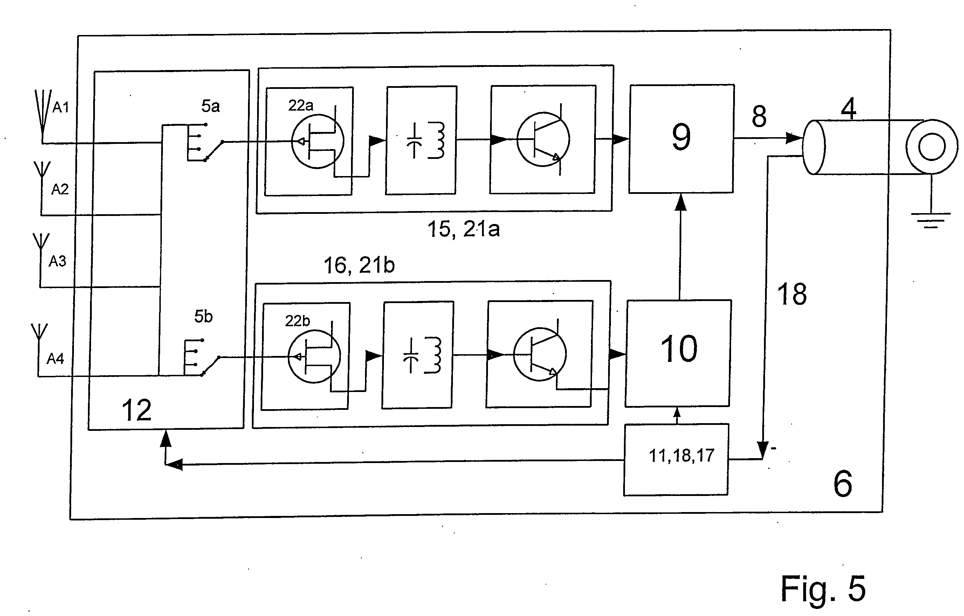

Fig. 6:
Antennenverstärker 21a, 21b wie in Fig. 5, jedoch jeweils mit einstellbarem Transformationsglied 29a, 29b, eingestellt durch das Adress-Steuersignal 23 a, 23b zur Kompensation des Frequenzgangs der Antennen

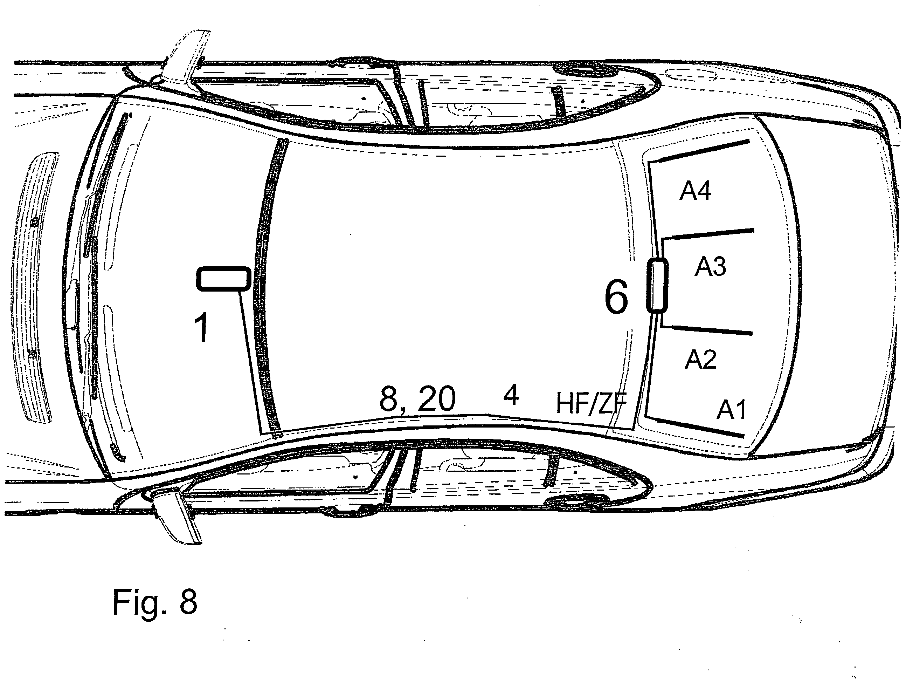

Fig. 7:
Beispiel der Diversityeffizienz von 2 Heizfeldantennen eines Fahrzeugs (sh. Fig.8) mit c als Anzahl der linearen Unterteilung des Winkelbereichs $2\pi$.
c = 0: Antennen ohne Überlagerung der Signale getrennt verfügbar.
c = 1: Antennen ohne Überlagerung der Signale getrennt verfügbar (über Null-Schaltstellung 24a oder 24b) + Überlagerung der Signale mit Winkelwert $2\pi/1$ (entspricht Winkelwert 0)
c = 2: Antennen ohne Überlagerung getrennt verfügbar + alle Überlagerungen mit Winkelwertunterschieden $2\pi/2$
c = n: Antennen ohne Überlagerung getrennt verfügbar + alle Überlagerungen mit Winkelwertunterschieden $2\pi/n$

Fig. 8:

Besonders vorteilhafte leistungsfähige und ökonomisch günstige Ausführungsform der Antennendiversityanlage 2, 3 für den UKW-Empfang mit dem Antennendiversitymodul 6 an der Auto-Heckfensterscheibe mit kurzen Verbindungen zu den als Leiter aufgedruckten passiven Antennen. Das Antennendiversitymodul 6 ist mit nur einem Verbindungskabel als Hochfrequenzleitung 4 zum Empfänger 1 zur Übertragung des summierten Ausgangssignals 8 und z.B. des ZF-Signals 20 verbunden. Auch die Gleichstromversorgung für das Antennendiversitymodul 6 kann vorteilhaft über den Innenleiter der Hochfrequenzleitung 4 erfolgen.

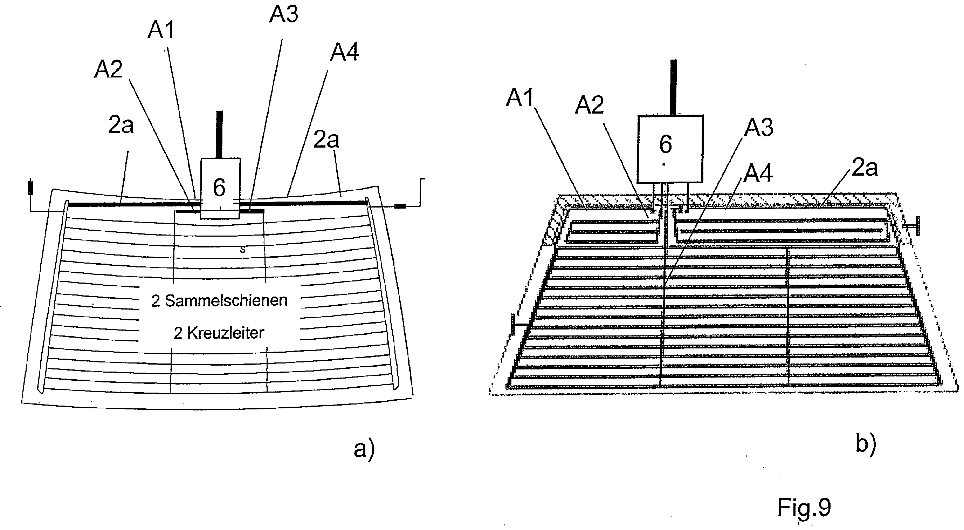

Fig. 9: Typische, vorteilhafte Strukturen von Antennen auf der Heckfensterscheibe eines Fahrzeugs mit einem Antennendiversitymodul 6 nach der Erfindung

> a) Die Antennen A1 und A4 sind durch Anschlüsse an die Sammelschienen des Heizfeldes mit den Zuleitungen 2a gebildet. Zwei weitere Antennen A2 und A4 sind als Kreuzleiter quer zu den horizontalen Heizleitern ausgebildet.
> b) A1 und A4 wie unter a), A3 als Kreuzleiter und A2 als flächige Struktur zwischen dem Heizfeld und dem Fensterrahmen

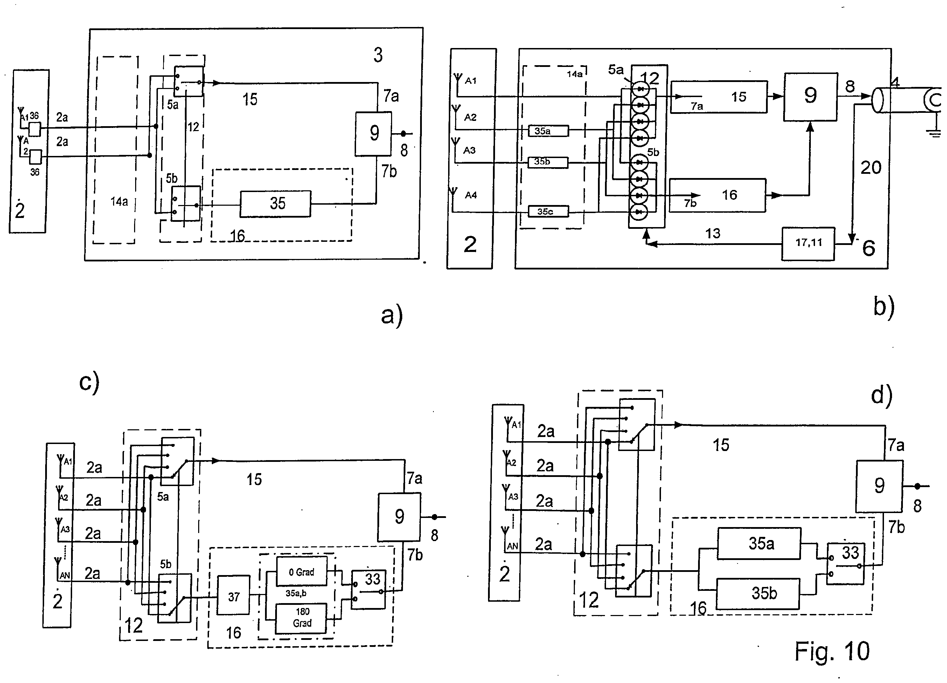

Fig. 10: Blockdiagramme des grundsätzlichen Aufbaus von Antennen-Diversity-Anlagen nach der Erfindung zur Erläuterung der Wirkungsweise.

> a) einfache Ausführungsform einer Anordnung nach der Erfindung mit zwei Antennen A1, A2, einem gemeinsamen Signalpfad 14a vor der Aufzweigung und zwei Schaltern 5a, 5b, einem Phasendrehglied 35 im separaten Signalpfad (16) und dem Summationsglied 9.
> b) Anordnungen wie in Figur a), jedoch mit vier Antennen und mit drei Phasendrehgliedern 35a, 35b, 35c im gemeinsamen Signalpfad 14a zur Optimierung der Diversity-Effizienz im Summensignal 8 durch Wahl geeigneter Phasendrehwerte.
> c) Anordnung wie in Figur a), jedoch mit vier Antennen und schaltbaren Phasendrehwerten von 0° beziehungsweise 180° und mit Grundphasendrehglied 37 zur Verbesserung der Diversity-Effizienz
> d) Anordnungen wie in Figur b), jedoch mit Phasendrehgliedern 35a, 3 5b mit geeigneten Phasendrehwinkeln zur Optimierung der Diversity-Effizienz

Fig. 11: Anordnung nach der Erfindung entsprechend Fig. 10 d), jedoch mit einem zusammengefassten, mehrstufigen Phasendrehglied 32 und mehrstufigem Phasenwahlschalter 33 sowie mit der elektronischen Steuereinrichtung mit Speicher 11 und dem Diversityprozessor 17 zur Ansteuerung des adressierbaren Signalwahlschalters 12 und dem mehrstufigen Phasenwahlschalter 33.

Fig. 12: Diversity-Effizienz in Abhängigkeit vom eingestellten Phasendrehwinkel der Phasendrehglieder; Beispiel a) am unteren Ende des UKW-Frequenzbandes b) am oberen Ende des UKW-Frequenzbandes.

> Kurve 1): Diversity-Effizienz einer Anordnung mit zwei Antennen in Abhängigkeit vom Phasendrehwinkel des Phasendrehglieds 35 in Fig. 10a mit eindeutigem Maximum (Pfeil)
> Kurve 2): Diversity-Effizienz der Anordnung wie für Kurve 1 jedoch bei zusätzlicher Verfügbarkeit eines weiteren Phasendrehglieds wie in Fig. 10d (jedoch mit nur zwei Antennen). Summarisch ergibt sich das durch Pfeil gekennzeichnete Maximum.
> Kurve 3): Diversity-Effizienz der Anordnung wie für Kurve 2 bei Erweiterungen des Systems auf insgesamt drei Phasendrehglieder mit einer weiteren geringfügigen, durch Pfeil gekennzeichneten Anhebung des Maximum.
> Kurve 4) und Kurve 5): die Verfügbarkeit weiterer Phasendrehglieder bringt keine technisch auswertbare Erhöhung der maximal erreichbaren Diversity-Effizienz mit sich.

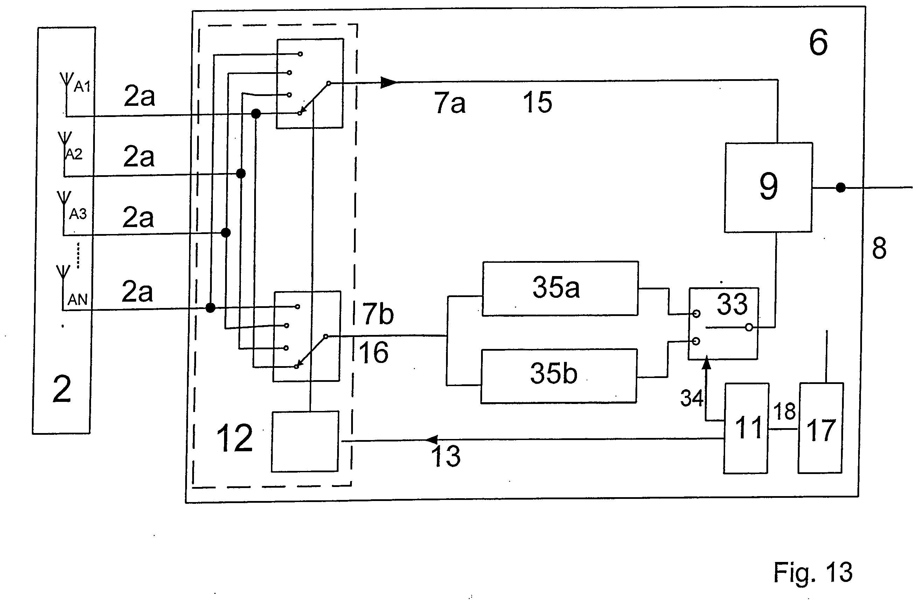

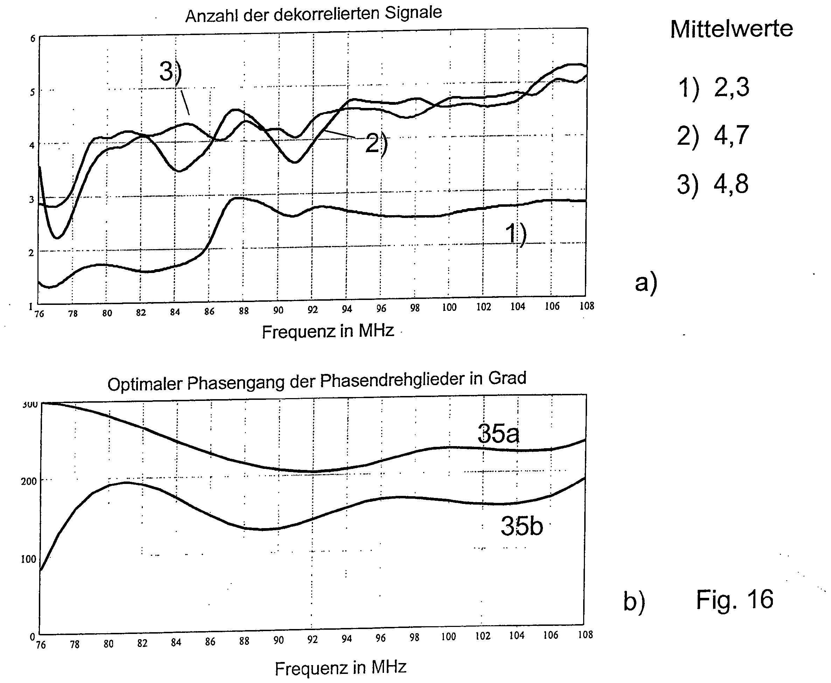

Fig. 13: Bevorzugte besonders wirtschaftliche Anordnung nach der Erfindung mit jeweils zwei Phasendrehgliedern 35a, 35b mit fest eingestellten Phasenwinkeln der Phasendrehglieder 35a, 35b für alle Kombinationen der mit dem adressierbaren Signalwahlschalter 12 ausgewählten Antennenpaare der Mehrantennenanlage 2. Die Phasen der Phasendrehglieder sind vorzugsweise in Anpassung an die Frequenzabhängigkeit der Mehrantennenanlage 2 frequenzabhängig, wie in Figur 16b dargestellt, optimal gestaltet.

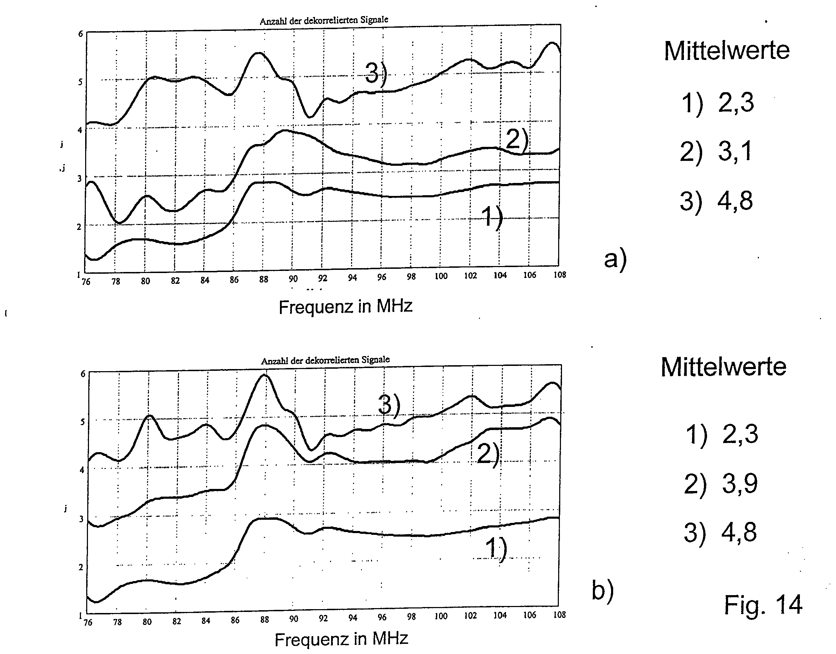

Fig. 14: Diversity-Effizienz am Beispiel einer Mehrantennenanlage 2 mit vier Antennen wie in den Figuren 8 und 9a im Frequenzbereich des FM-Rundfunks mit unterschiedlich technischen Aufwand an Phasendrehgliedern.

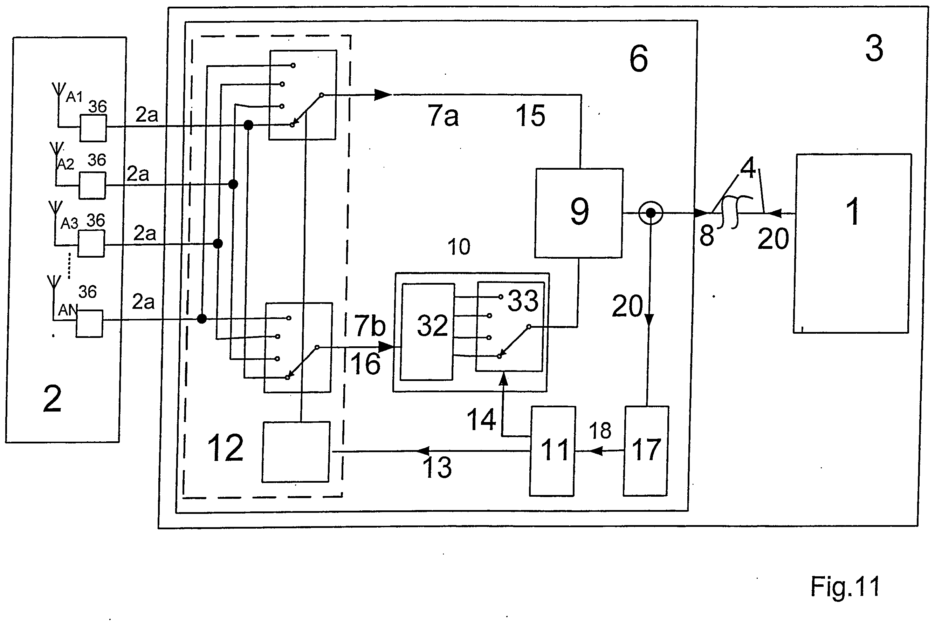

> a)
>
> > Kurve 1): Vergleichskurve bei Verfügbarkeit von ausschließlich vier Antennen ohne einen zweiten Signalpfad nach der Erfindung. (Mittelwert 2,3)
> > Kurve 2): die eingestellten Phasenwinkel der Phasendrehglied 35a bzw. 35b der Anordnung in Fig. 13 betragen 0° bzw. 90° (Mittelwert 3,1)
Kurve 3): für jede der 6 möglichen, mit dem adressierbaren Signalwahlschalter 12 einstellbaren unterschiedlichen Antennenkombinationen stehen jeweils zwei zugehörige, optimierte Winkelkombinationen der Phasendrehglieder 35a, 35b zur Verfügung (z.B. wie in Fig. 11). (Mittelwert 2,3)

b)
Kurven 1) und 3): Diversity-Effizienz wie in den Kurven 1) und 3) der Figur a); Kurve 2): Diversity-Effizienz für die eingestellten Phasenwinkel der Phasendrehglieder 35a bzw. 35b von 0° bzw. 180°.

Fig. 15:

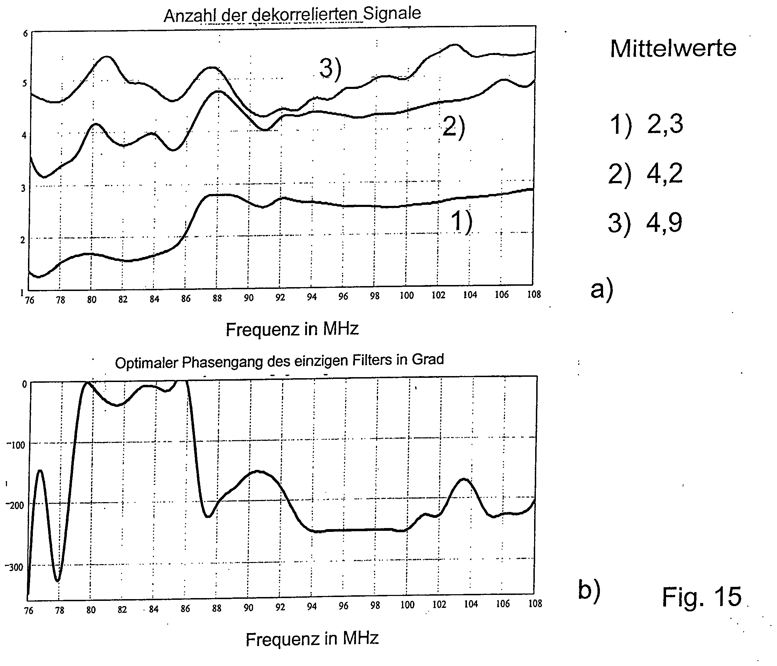

a)
Kurve 2): Diversity-Effizienz für die eingestellten Phasenwinkel der Phasendrehglieder 35a bzw. 35b von 0° bzw. 180° wie Kurve 2) in Figur 14b, mit Grundphasendrehglied 37 gemäß Fig. 10c mit optimiertem Frequenzgang wie in Figur 15b. Kurven 1) und 3): Diversity-Effizienz wie in Figur 14a) zum Vergleich;
b) Frequenzabhängigkeit des optimierten Phasendrehwinkels des Grundphasendrehglieds 37 in Fig. 10c

Fig. 16:

a)
Kurve 2): Diversity-Effizienz der besonders wirtschaftlichen Anordnung in Fig. 13 mit jeweils zwei Phasendrehglieder 35a, 35b mit fest eingestellten, für die jeweilige Frequenz optimierten Phasenwinkeln der Phasendrehglieder.
Kurve 3): zum Vergleich stehen jeweils für jede der 6 möglichen, mit dem adressierbaren Signalwahlschalter 12 einstellbaren Antennenkombinationen zwei zugehörige, optimierte Winkelkombinationen der Phasendrehglieder zur Verfügung.
Kurve 1): Vergleichskurve bei Verfügbarkeit von ausschließlich vier Antennen ohne einen zweiten separaten Signalpfad nach der Erfindung.

Fig. 17:

a) Richtdiagrammen der Antennen A1, A2 und
b) der hierzu gespiegelten Antennen A3, A4 der Mehrantennenanlage 2 in Figur 9a. Die azimutalen Mittelwerte der Richtdiagramme sind durch Amplitudenkorrekturglieder 36 einander angeglichen.

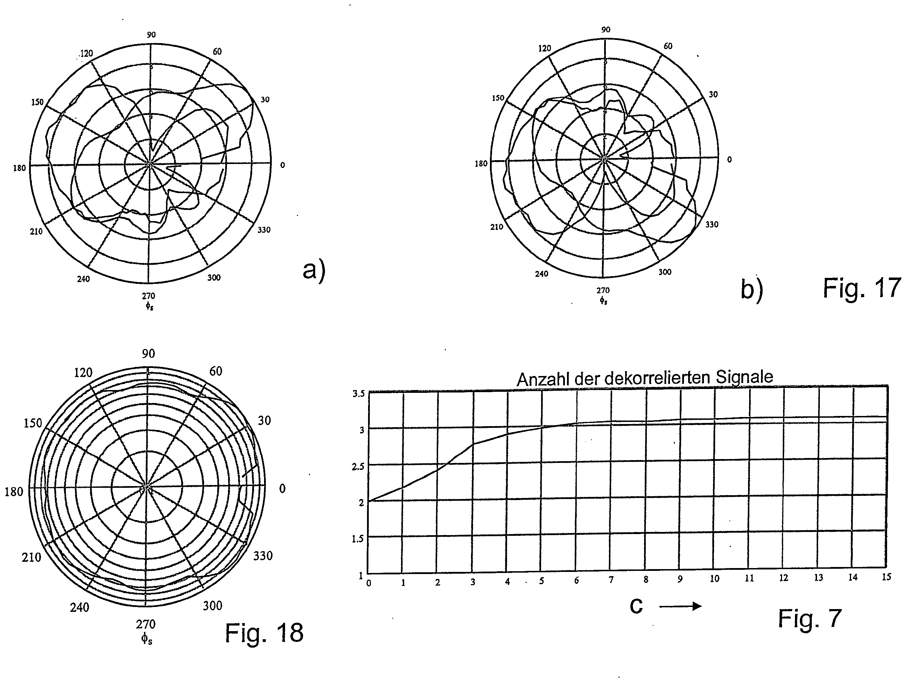

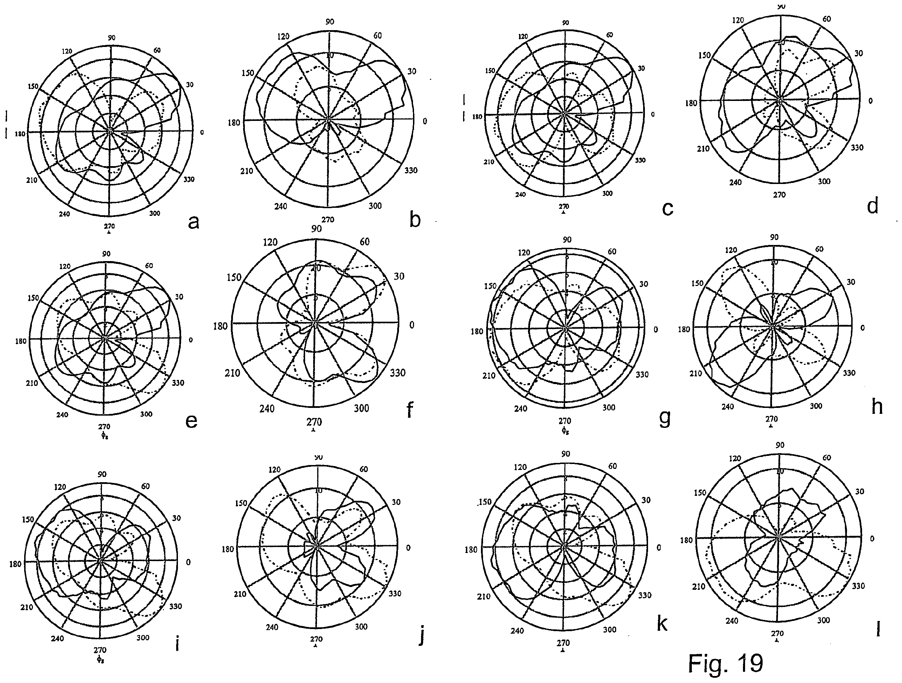

Fig. 18: Azimutales Richtdiagramm des bei jedem azimutalen Winkel verfügbaren Maximalwerts aus den in Figur 19 dargestellten verfügbaren Richtdiagrammen mit einer Diversity Anordnung gemäß Figur 13.

Fig. 19: Azimutale Richtdiagramme der Anordnung in Figur 13 mit jeweils zwei Phasendrehgliedern 35a, 35b mit fest eingestellten, für die jeweilige Frequenz optimierten Phasenwinkeln der Phasendrehglieder gemäß den Winkelwerten in Fig. 16b und mit Diversity-Effizienz gemäß Kurve 2) in Fig. 16a. die Diagramme a), c), e), g), i), k) zeigen jeweils die beiden Einzeldiagramme der vom adressierbaren Signalwahlschalter 12 ausgewählten Antennen-Kombinationen ; die jeweils daneben stehenden 6 Diagramme b), d), f), h), j), l) zeigen die beiden Richtdiagramme, welche sich bei Kombination mit den angegebenen Phasendrehgliedern ergeben. Zusammen ergeben sich die Richtdiagramme der vier einzelnen Antennen und zusätzlich insgesamt 12 Richtdiagramme durch Auswahl mit dem Phasenwahlschalter 33.

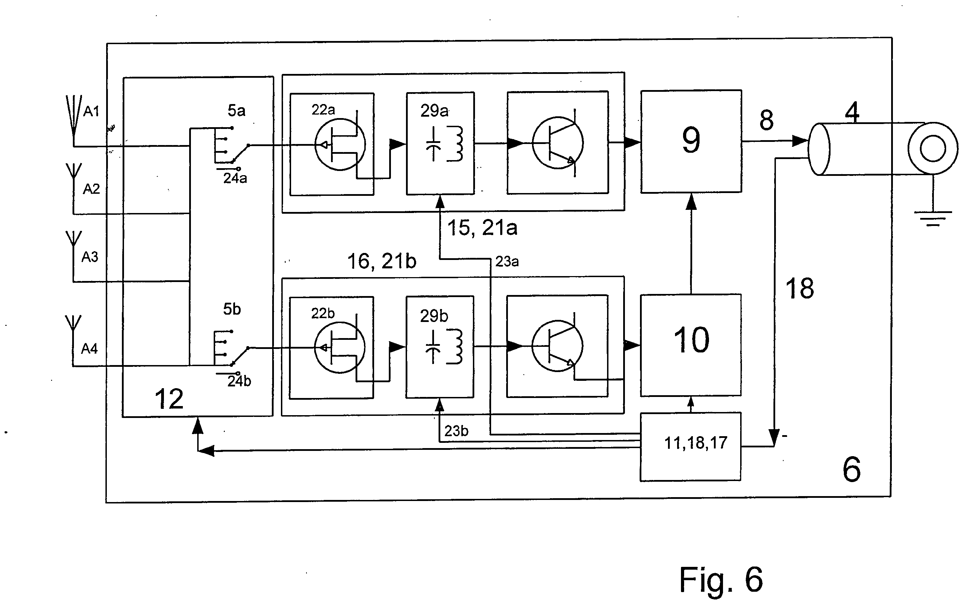

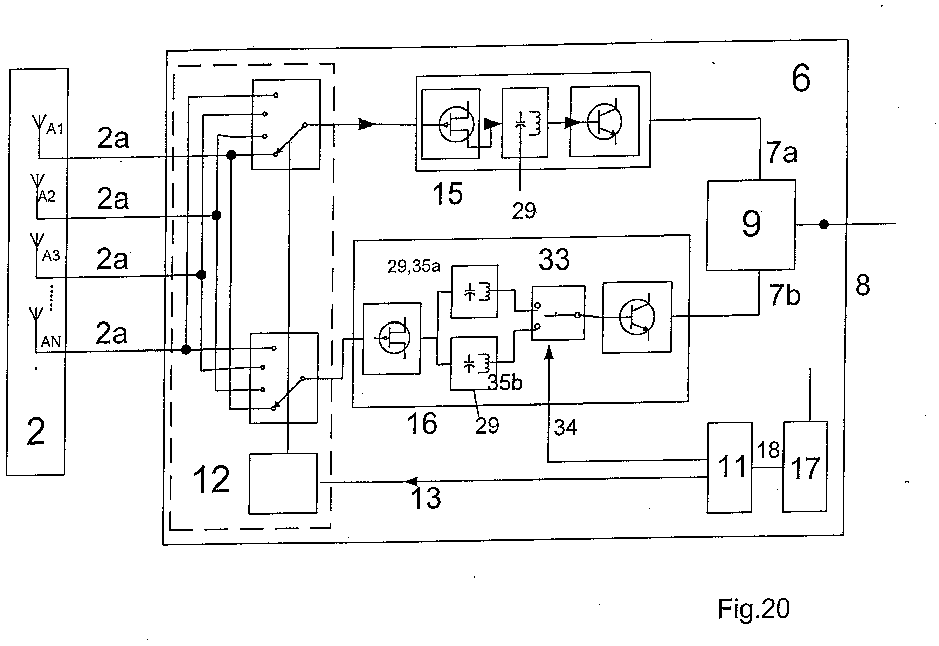

Fig. 20: vorteilhafte Realisierungsform einer Diversity Anordnung nach der Erfindung mit hochohmigem Verstärkerfrontend 22a, 22b gemäß Figur 6, mit Transformationsgliedern 29a, 29b, welche zusätzlich als Phasendrehglieder 35a, 35b gestaltet sind und mit Phasenwahlschalter 33.

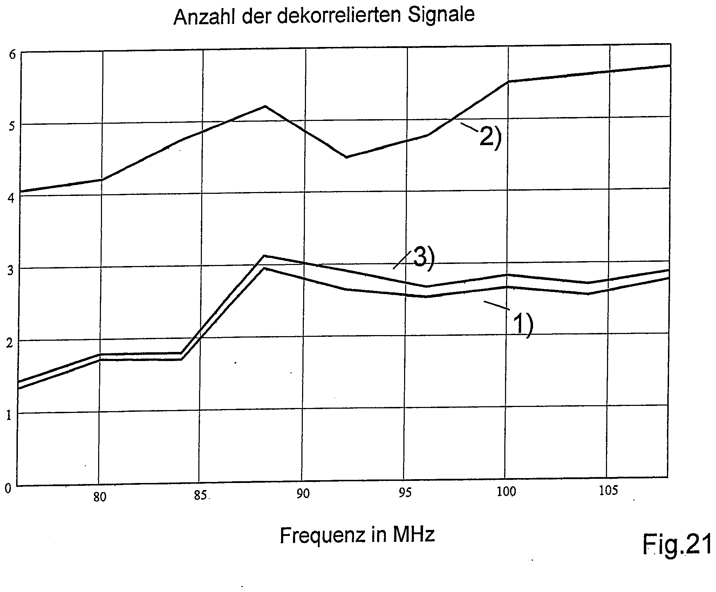

Fig. 21: Diversity Effizienz einer vorteilhaften Realisierungsform einer Diversity-Anordnung nach der Erfindung mit Phasendrehgliedern 35a, 35b, 35c im gemeinsamen Signalpfad 14a wie in Figur 10b im Vergleich unterschiedlicher Szenarien

Kurve 1) ausschließlich vier Antennensignale ohne Bildung von Summensignalen
Kurve 2) vier Antennensignale und Bildung von Summensignalen aus allen möglichen Kombinationen aus jeweils zwei Antennen unter Voraussetzung günstiger Phasendrehwerte der Phasendrehglieder 35a, 35b, 35c.
Kurve 3) Anordnung wie in Kurve 2, jedoch ohne wirksame Phasendrehglieder 35a, 35b, 35c, deren Phasendrehwerte zu null eingestellt sind.

Als Maß für die Leistungsfähigkeit einer Antennen-Diversity-Anlage dient die Diversity-Effizienz, welche der Anzahl der fiktiv verfügbaren dekorrelierten Empfangssignale entspricht. Die Verbesserung des Empfangs im von Mehrwegeausbreitung durch Signaleinbrüche (Fadings) gestörten Rayleigh-Empfangsfeld ergibt sich aus der Reduktion der Störungen, welche im UKW Bereich vielfach durch Nachbarkanäle und Gleichkanäle, sowie in Schwachsignalgebieten durch Rauschen verursacht werden. Ist $p_s$ die Wahrscheinlichkeit für das Auftreten einer Störung beim Empfang mit nur einer Antenne in einem Empfangsgebiet, so ist die Wahrscheinlichkeit für das Auftreten einer Störung im Diversity-Betrieb in demselben Empfangsgebiet reduziert auf

$$p_d = p_s^n$$

wobei n die charakteristische Größe der Diversity-Effizienz der Anlage bedeutet. Dieser Bezugswert dient im Fnichtolgenden zur Beschreibung der Leistungsfähigkeit der Diversity-Antennenanlage. Mit der vorliegenden Erfindung wird somit das Ziel verfolgt, mit möglichst kleinem Aufwand an Technik eine möglichst große Diversity-Effizienz zu erzielen.

Die Möglichkeit des Verzichts auf eine kontinuierliche Phasenregelung bei der Überlagerung von zwei unterschiedlichen Antennensignalen im Hinblick auf eine Maximierung des Signal-Störverhältnisses beim Empfang im Rayleigh Empfangsfeld beruht auf dem überraschenden Effekt, dass eine diskrete Unterteilung des Winkelraums von $2\pi$ für die zur Verfügungstellung unterschiedlich gephaster überlagerter Signale über ein gewisse Anzahl c hinaus keine weitere Verbesserung bewirkt. Insbesondere bei den häufig auftretenden Gleichkanal- oder Nachbarkanalstörungen sucht das System nicht eine Phaseneinstellung, welche zur gleichphasigen Summation im Summationssignal 8 führt, sondern eine solche, die das maximale Signal-Störverhältnis liefert.

Dies geht eindrucksvoll aus Figur 7 hervor, wo die Diversityeffizienz von zwei Heckscheibenantennen als ausschlaggebendes Maß über der Anzahl der Unterteilungen in lineare Winkelschritte c aufgetragen ist und für solche Antennen typisch ist. Bei allen Untersuchungen hat sich gezeigt, dass die Zahl c = 5, mit linearer Unterteilung in Winkelschritten von etwa 70 Grad ausreicht um die maximal erreichbare Diversityeffizienz praktisch zu erreichen.

Eine weitere vorteilhafte Lösung besteht darin, in Abweichung von der linearen Unterteilung des Phasenraumes von $2\pi$ die komplexen Richtdiagramme der Antennen ($A_1$, $A_2$,..$A_N$) am Fahrzeug zu erfassen und jeweils für 2 Antennen aus der Mehrantennenanlage 2 anhand einer auf Statistik beruhenden Simulationsrechnung der Diversityeffizienz im Rayleigh-Empfangsszenario die optimalen diskreten Winkelwerte im Hinblick auf möglichst großen Zuwachs der Diversityeffizienz mit jeder hinzugenommenen Winkelunterteilung zu ermitteln. Dies geschieht im Interesse einer möglichst kleinen Anzahl von Unterteilungen für den Winkelbereich $0...2\pi$. Damit kann jeder bestimmten Schaltstellung (a = 0,1, 2..N, b = 0,1, 2,..N) des adressierbaren Signalwahlschalters 12 jeweils ein Phasenvektor (i = 1, 2,....) von diskreten Phasendrehwinkeln $\Phi_i$ der einstellbaren Phasendreheinrichtung 10 fest zugeordnet werden. Damit kann eine Maximalzahl von I < 5 unterschiedlichen Phasendrehwinkeln $\Phi_i$ gestaltet werden. Ein wesentlicher Vorteil der vorliegenden Erfindung besteht in dem Sachverhalt, dass aufgrund des Fehlens eines kontinuierlich in die Phasung eingreifenden Regelvorgangs mit den o.g. Nachteilen mit der erfindungsgemäßen Antennendiversityanlage 2, 3 wenige Schaltschritte genügen, um ein störungsfreies Signal als summiertes Ausgangssignal 8 zu finden. Die zusätzliche Möglichkeit, aus der Mehrantennenanlage 2 paarweise mehrere Antennenkombinationen über den adressierbarer Signalwahlschalter 12 auszuwählen, steigert die Diversityeffizienz weiterhin in hohem Maße.

Um den Suchvorgang nach einem ungestörten Signal aus der Vielfalt der Einstellungen des adressierbarer Signalwahlschalter 12 und der einstellbare Phasendreheinrichtung 10 möglichst effizient zu gestalten ist in einer besonders vorteilhaften Ausgestaltung der Erfindung im Diversityprozessor 17 ein Logikprozessor mit Gedächtnis vorgesehen, in welchem die Intensität und Häufigkeit von Störungen der verfügbaren Kombinationen aus Schaltstellung (a = 0,1, 2..N, b = 0,1, 2,..N) der Signalwahlschalter 12 und diskreten Phasendrehwinkeln $\Phi_{a,b,i}$ der Phasendreheinrichtung 10 laufend erfasst und aktualisiert ist. Daraus wird fortschreitend eine Ranking-Liste der Rangfolge - beginnend mit der Kombination mit den kleinsten Störungen - gebildet. Hierzu wird das Störungsanzeigesignal 18 als logisches Adress-Wahlsignal 27 zur gezielten Auswählbarkeit der in der elektronischen Steuereinrichtung mit Speicher 11 abgelegten Kombinationen von Schaltstellungen (a = 0,1, 2..N, b = 0,1, 2,..N) und Phasendrehwinkeln $\Phi_{a,b,i}$ abgelegt. Bei Auftreten einer Störung wird anhand der gebildeten Rangfolge gezielt auf eine Kombination umgeschaltet, welche mit höherer Wahrscheinlichkeit einen störungsarmen Empfang ermöglicht.

Die Wahl der diskreten Phasendrehwinkel $\Phi_{a,b,i}$ kann kostengünstig mit Hilfe eines analog einstellbaren Phasendrehglieds 26 gestaltet werden. Hierfür wird in der Steuereinrichtung mit Speicher 11 jeweils sowohl eine Spannung als Phasen-Einstellsignal 14 erzeugt, welche dem analog einstellbaren Phasendrehglied zur Einstellung des jeweils betreffenden diskreten Phasendrehwinkeln $\Phi_{a,b,i}$ zugeführt ist, als auch ein logisches Schalt-Einstellsignal 13 zur Einstellung der zugeordneten Schaltstellung (a = 0,1, 2..N, b = 0,1, 2,..N) des adressierbaren Signalwahlschalters 12 erzeugt. Ein geeignetes analog einstellbares Phasendrehglieds 26 kann z. B. auf an sich bekannte Weise aus 3-dB 90 Grad Hybrid-Gliedern hergestellt werden, welche mit Hilfe von zwei Varaktordioden im Winkelbereich -90 Grad und 400 Grad stufenlos durch Anlegen einer entsprechender Varaktordiodenspannung eingestellt werden. Alle übrigen in dem Antennendiversitymodul 6 zur Steuerung der Antennendiversityanlage 2, 3 notwendigen Blöcke können vorteilhaft kostengünstig und Raum sparend als integrierte Schaltkreise realisiert werden.

Bei Unterbringung des Diversityprozessors 17 im Antennendiversitymodul 6 ist es vorteilhaft, als Träger der Störung im summierten Ausgangssignal 8 das ZF-Signal 20 dem Diversityprozessors 17 über die Hochfrequenzleitung 4 auf an sich bekannte Weise zuzuführen. Zusätzlich kann er kürzesteres vorteilhaft sein, zur Anzeige der Umschaltaktivitäten Mute-Pulse über die Hochfrequenzleitung 4 zum Empfänger 1 zu leiten und mit einer darin befindlichen Stumm-Schaltung das Umschalten vollkommen unhörbar zu gestalten. '

Bei Unterbringung des Diversityprozessors 17 im Empfänger 1 kann das für die Auswahl der Einstellung einer Schaltstellung (a = 0,1, 2..N, b = 0,1, 2,..N) in Verbindung mit einem zugeordneten diskreten Phasendrehwinkel $\Phi_{a,b,i}$ notwendige Adress-Wahlsignal 27 vorteilhaft über die Hochfrequenzleitung 4 zum Antennendiversitymodul 6 geleitet werden.

In Gebieten mit großen Empfangssignalen sind Phasendrehglieder mit Varaktordioden durch nichtlineare Effekte gefährdet. In vorteilhaften Ausführungsformen der Erfindung können deshalb vorzugsweise fest eingestellte Phasendrehglieder in Verbindung mit Phasenwahlschalter verwendet werden, so dass über mehrere Antennen-Kombinationen und Phasen-Kombinationen eine Vielzahl von Richtdiagrammen, bezogen auf den Ausgang des Summationsglieds 9 gestaltet werden. Diese Richtdiagramme stehen in den unterschiedlichen Empfangssituationen zur Auswahl durch den Diversityprozessor 17 zur Verfügung. In Fig. 8 ist eine besonders vorteilhafte leistungsfähige und ökonomisch günstige Ausführungsform der Antennendiversityanlage 2, 3 für den UKW-Empfang mit dem Antennendiversitymodul 6 an der Auto-Heckfensterscheibe mit kurzen Verbindungen zu den als Leiter aufgedruckten passiven Antennenstrukturen dargestellt. Aufgedruckte Antennenstrukturen sind beispielhaft in den Figuren 9a und 9b mit jeweils vier Antennensignalen dargestellt. Das Antennendiversitymodul 6 ist vorzugsweise mit nur einem Verbindungskabel als Hochfrequenzleitung 4 zum Empfänger 1 zur Übertragung des summierten Ausgangssignals 8 und z.B. des ZF-Signals 20 verbunden. Auch die Gleichstromversorgung für das Antennendiversitymodul 6 kann vorteilhaft über den Innenleiter der Hochfrequenzleitung 4 erfolgen. An Hand der folgenden Beschreibung wird erläutert, auf welche Weise die Überlagerung der Signale in den beiden Signalpfaden 15, 16 im Antennendiversitymodul 6 auf kostengünstige Weise erfolgen kann und sich dabei eine hohe Diversity-Effizienz mit minimalem Aufwand an Phasendrehgliedern 35 und Phasenwahlschaltern 33 realisieren lässt.

Im Gegensatz zu den eingangs beschriebenen phasengeregelten Systemen, bei welchen die Phase durch ein Regelsystem eingestellt wird, kann bei einem System der vorliegenden Erfindung eine maximale Diversity-Effizienz nur dadurch erreicht werden, dass die zur Auswahl vorliegenden fest eingestellten Phasendrehglieder, an die Mehrantennenanlage 2 spezifisch angepasste, optimale Werte besitzen. Um diese Anpassung vorzunehmen, ist es notwendig die Richtdiagramme der Antennen $A_1$, $A_2$,..$A_N$ nach Betrag und Phase zueinander, bezogen auf einen gemeinsamen Punkt unter Einbeziehung aller Antennenzuleitungen 2a und sonstiger die Phase verändernden Elemente vorzugsweise messtechnisch im Antennenmessfeld mit Drehstand oder gegebenenfalls durch Modellrechnungen zu ermitteln. Das Vorgehen wird an Hand des einfachen Beispiels in Fig. 10a erläutert, wobei das Phasendrehglied 35 im zweiten Signalpfad 15 der separaten Signalpfade 15, 16 eingebracht ist. Für die Betrachtung der Wirkungsweise der Überlagerung der Signale in den beiden separaten Signalpfaden 15, 16 ist deren Phasenlage zueinander jeweils am Eingang des Summationsglieds 9 ausschlaggebend. Somit sind die Eingänge des Summationsglieds 9 der Referenzpunkt, wo die beiden Signale ohne weitere Phasenänderung summiert werden. Um günstige Phasenwerte für das Phasendrehglied 35 in Fig. 10a ermitteln zu können, ist es also notwendig, die Richtdiagramme der Antennen, bezogen auf den Referenzpunkt ohne das Phasendrehglied 35 zu kennen. Dabei kommt es bei den zu überlagernden Signalen lediglich auf deren Phasenunterschied an. Deshalb können zum Beispiel nachträglich eingebrachte, die Phase ändernde Elemente in einem der Signalpfade durch zusätzliche Einbringung der gleichen Phasenänderung im anderen Signalpfad ausgeglichen werden.

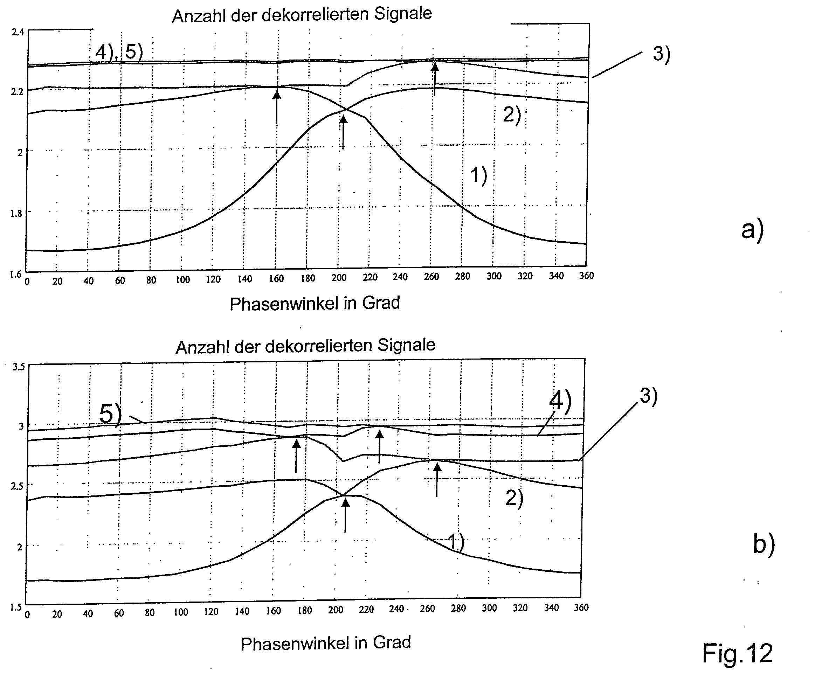

Sind diese Richtdiagramme der beiden Antennen, bezogen auf die Signaleingänge des Summationsglieds 9 unter der Maßgabe, dass die Ausgangsphase im Phasendrehglied 35 verschwindend ist, bekannt, so kann durch Variation des Phasendrehwinkels im Phasendrehglied 35 unter Anwendung der oben genannten Berechnungsmethode der Maximalwert für die Diversity-Effizienz gefunden werden. Das Ergebnis ist in Figur 12a in Kurve 1) mit dem durch Pfeil gekennzeichneten Maximalwert dargestellt. Der Winkelwert des Phasendrehglieds 35 für das Maximum der Diversity-Effizienz ergibt sich dann zu null, wenn die in den Antennen A1, A2 und den Antennenzuleitungen 2a vorhandenen, die Phase verändernden Elemente gerade den hierfür notwendigen Phasenwert besitzen. Umgekehrt ist es deshalb zwingend gegeben, dass sich für die Antennenanlage in Fig. 10a solche die Phase verändernden Elemente einbringen lassen derart, dass die Phasenänderung durch das Phasendrehglied 35 in Fig. 10a entfallen kann.

Wie bereits oben ausgeführt, wird die Diversity Effizienz n aus Kenntnis der Störwahrscheinlichkeit im Betrieb mit einer Antenne und im Diversity-Modus über die oben angegebene Gleichung ermittelt. Grundsätzlich kann die Störwahrscheinlichkeit aus Messungen im Fahrbetrieb ermittelt werden. Diese Methode ist jedoch extrem aufwändig, wenn relevante, auf einer extremen Vielzahl von statistisch unterschiedlichen Empfangsbedingungen mit Rayleigh-Mehrwegeausbreitung basierende Ergebnisse gewonnen werden sollen. Insbesondere für die Ermittlung der für die maximalen Werte der Diversity-Effizienz notwendigen Winkeldrehwerte von Phasendrehgliedern kommen unter praktischen Gesichtspunkten nur Modellrechnungen mit modernen Rechnern in Frage. Hierbei wird z.B. mit Hilfe von rechnerisch simulierten Testfahrten in einem elektromagnetischen Wellenfeld mit Rayleigh-Amplitudenverteilung durch Vorgabe einer räumlich verteilten Störfeldstärke für das Auftreten einer Störung der zeitliche Anteil der Störung im Vergleich zur gesamten Zeit der Beobachtung als Störwahrscheinlichkeit $p_s$ im Betrieb mit einer Referenzantenne und als $p_d$ im Betrieb im Diversity-Modus festgestellt, woraus die Diversity-Effizienz n als

Äquivalent von n dekorrelierten Antennensignalen ermittelt wird. Hierbei werden die für die jeweilige Polarisation gemessenen oder daraus abgeleiteten und nach Betrag und Phase bekannten Richtdiagramme verwendet. Zur Simulation des Rayleigh-Meerwegeszenarios wird z.B. über eine Vielzahl von fiktiven Fahrabschnitten dem Antennensystem jeweils eine ausreichende Anzahl von Wellen aus statistisch gewählten Einfallsrichtungen mit statistisch gewählter Amplitude und Phase zugewiesenen, woraus sich ein statistisch zuverlässiger Wert für die Diversity-Effizienz ermitteln lässt. Dieses Verfahren lässt sich sowohl zur Ermittlung der Diversity-Effizienz im Hinblick auf Rauschstörungen in Empfangsgebieten mit schwachen Empfangssignalen als auch auf Empfangsgebiete mit vorzugsweise durch Nachbarkanal und Gleichkanal bedingte Störungen anwenden. Das Berechnungsverfahren ist zum Beispiel beschrieben in H. Lindenmeier et al., SAE Technical Paper Series 981147 (ISSN0148-7191) Diversity-Effectiveness .....

Bringt man also in einer vorteilhaften Ausgestaltung der Erfindung das Phasendrehglied 35 in Fig. 10a nicht in den separaten Signalpfad 16 sondern in den gemeinsamen Signalpfad 14a der Diversity-Empfangseinrichtung 3 ein - z. B. in die Zuleitung der Antenne A1 - so kann das oben besprochene Maximum an Diversity-Effizienz (Kurven 1 in Fig. 12a, b) bei entsprechender Einstellung des Phasendrehwertes des Phasendrehglieds 35 aufgrund der Wirkungsgleichheit ebenso erreicht werden. Dieses Maximum wird mit drei diversitätsmäßig unterschiedlichen Signalen 8 am Ausgang des Summationsgliedes 9 erreicht. Die beiden Empfangssignale der Antennen A1 und A2 stehen am Ausgang des Summationsgliedes 9 alternativ zur Verfügung, wenn der Auswahlschalter 5a wechselweise eines der Antennensignale durchschaltet und der Schalter 5b in Null-Schaltstellung 24a, 24b eingestellt ist und kein Signal weiterleitet. Nach Umschaltung des Schalters 5b und Durchschaltung des Signals der Antenne A2 mit dem Schalter 5a ergibt sich das gewünschte summierte Ausgangssignal 8. Wie es aus Figur 12 hervorgeht, lässt sich durch Hinzufügen dieses optimierten summierten Ausgangssignals 8 die Diversity-Effizienz von circa 1,65 auf 2,3 steigern.

Bei Erweiterung der Mehrantennenanlage 2 auf zum Beispiel vier Antennen und einer entsprechenden Erweiterung des adressierbaren Signalwahlschalters 12 mit Null-Schaltstellung 24a, 24b wie in Figur 6 können für solche, -die Phase verändernden Elemente im Hinblick auf die Diversity-Effizienz günstige Phasenwerte angegeben werden. In Figur 10b ist dieses Wirkungsprinzip erfindungsgemäß auf eine Mehrantennenanlage 2 mit vier Antennen erweitert. Zu diesem Zweck sind in die Signalleitungen von drei der Antennen Phasendrehglieder 35a, 35b, 35c in den gemeinsamen Signalpfad 14a eingebracht. Die Phasendrehwinkel sind im Interesse einer möglichst großen Diversity-Effizienz geeignet eingestellt. Mit Hilfe des adressierbaren Signalwahlschalters 12, welcher zweckmäßig mit Schaltdioden realisiert ist, können alle Antennensignale getrennt zum Ausgang des Summationsglieds 9 durchgeschalteten werden. Zusätzlich können in diesem Beispiel mit vier Antennen alle sechs möglichen Kombinationen von Summensignalen aus jeweils zwei Antennensignalen mit ihren Phasenzuständen zueinander gebildet werden, wie sie aufgrund der Phasendrehglieder am Eingang des adressierbaren Signalwahlschalters 12 vorliegen. Die Effektivität der richtigen Wahl der Phasendrehwinkel in den Phasendrehgliedern 35a, 35b, 35c geht eindrucksvoll aus dem Diagramm in Figur 21 hervor. Dort ist für ein Beispiel im UKW Frequenzbereich die Diversity-Effizienz einer derartigen Anlage nach Figur 10b in Kurve 1 mit optiminimalen Phasendrehwinkeln und im Kurve 2 für den Fall dargestellt, wenn die Phasendrehglieder im gemeinsamen Signalpfad 14a nicht enthalten sind beziehungsweise den Phasendrehwinkel gleich null besitzen. Um eine möglichst große Diversit-Effizienz zu erzielen sind günstige Werte für die Phasendrehwinkel anhand einer statistischen Evaluation der Diversity-Effizienz zu ermitteln.

Eine weitere Steigerung der Diversity-Effizienz gegenüber der Anordnung in Figur 10a lässt sich gemäß Kurve 2) durch Bestellung eines zusätzlichen, ebenso in der Phase optimierten und mit einem Phasenwahlschalter 33 wie in Figur 10d anschaltbarem Phasendrehglied erreichen. Dieses Vorgehen kann durch Einbringung weiterer Phasendrehglieder und durch entsprechende Erweiterung des Phasenwahlschalters 33 weiter gesteigert werden, wobei der Zuwachs an Diversity-Effizienz jedoch geringer ist. Der Vergleich der Diagramme in Figur 12a und 12b, welche für das untere bzw. das obere Ende des UKW-Frequenzbands zutreffen, zeigt die relativ geringe Variation der für die Maxima zutreffenden Winkel bezüglich der Frequenzänderung.

Die Diagramme in Figur 12 zeigen, dass sich der größte Zuwachs an Diversity-Effizienz mit den beiden ersten Phasendrehgliedern erreichen lässt. In einer weiteren vorteilhaften Ausführungsform der Erfindung wird deshalb vorgeschlagen, für jede Kombination aus zwei Antennen jeweils nur zwei im Phasendrehwinkel optimiert eingestellte Phasendrehglieder zur Verfügung zu stellen, so dass jeweils diese beiden Antennen gesondert und zusätzlich zwei Signale am Ausgang der Phasendrehglieder zur Summation zur Verfügung stehen. Setzt man z.B. eine Mehrantennenanlage 2 mit vier Antennen A1... A4 voraus, so ergibt sich über die 6 möglichen paarweise Kombinationen ein Bedarf von 12 definierten Phasen der Phasendrehglieder 35a, 35b. Erfindungsgemäß wird deshalb vorgesehen, an Stelle getrennt ausgeführter Phasendrehglieder 35a, 35b ein mehrstufiges Phasendrehglied 32 mit 12 Ausgängen und einen entsprechend vielstufigen Phasenwahlschalter 33 gemäß Figur 11 vorzusehen. Mit einem System mit derart optimierten Phasen für alle paarweisen Kombinationen der Antennen lässt sich eine erhebliche Steigerung der Diversity-Effizienz erzielen. Dies geht aus dem Vergleich der Kurven 3) in den Figuren 14a und 14b jeweils mit den Kurven 1), welche die Diversity-Effizienz ohne die erfindungsgemäße Summation mit gephasten Antennensignalen beschreibt, hervor. Aufgrund der exponentiell mit der Diversity-Effizienz anwachsenden Reduktion der Störwahrscheinlichkeit ist mit Hilfe der Erfindung einige eklatante Verbesserung des Systems erreicht. Der Unterschied der Mittelwerte von 4,8-2,3 = 2,5 bedeutet zum Beispiel, dass bei einer Störwahrscheinlichkeit von 10% bei Fahrt mit einer Einzelantenne diese gegenüber dem Grundsystem ohne gephaste Summation von Signalen im Mittel um den Faktor $0.1^{2,5}$ = ca. 1/300 reduziert erscheint.

Weniger leistungsfähig ist das System, wenn an Stelle der beschriebenen optimiert eingestellten Phasendrehglieder für alle Antennen-Kombinationen lediglich die fest eingestellten Phasenwerte der Phasendrehglieder 35a und 35b in Fig. 10d von 0° und 90° zur Verfügung gestellt werden. Die damit erreichte Diversity-Effizienz mit einem Mittelwert von 3,1 der Kurve 2) in Figur 14a erwirkt zwar eine Verbesserung gegenüber dem Grundsystem, liegt jedoch nennenswert unter dem erreichbaren Maximum, welches durch Kurve 3) repräsentiert wird. Ähnlich verhält es sich mit einem System, bei welchem an Stelle der vorhergehenden Betrachtung fest eingestellte Phasenwerte 0° und 180° zur Verfügung gestellt sind. Der mit diesem System erreichbare Mittelwert der Diversity-Effizienz von 3,9 der Kurve 2 in Figur 14b lässt sich jedoch in einer weiteren vorteilhaften Ausgestaltung der Erfindung durch Einführung eines im Phasendrehwinkel optimierten Grundphasendrehglieds 37, wie in Figur 10c, noch weiter steigern. Hier zeigt sich der überraschende Effekt, dass sich durch Einführung des Grundphasendrehglieds 37 über alle Stellungen des adressierbaren Signalwahlschalters 12 und des Phasenwahlschalters 33 gemittelt, eine Erhöhung der Diversity-Effizienz erreichen lässt, wenn für die Phase bei jeder Frequenz ein optimaler Werte gewählt ist. Der hierfür erforderliche Verlauf der Phase ist für ein Beispiel in Figur 15b über den Frequenzbereich des UKW-Bandes dargestellt. Dieser Frequenzverlauf der Phase kann mit einer Hochfrequenz-Reaktanzschaltung bzw. Hochfrequenzfilter angenähert realisiert werden. Dabei ist es selbstverständlich gleichwertig, ob das Grundphasendrehglieds 37 mit der angegebenen Phase im zweiten Signalpfad 16 oder mit dem negativen Wert dieser Phase in den ersten Signalpfad 15 eingefügt ist. Diese Vertauschbarkeit der Einbringung in die Signalpfade 15 und 16 gilt analog für alle im Folgenden angestellten Betrachtungen der Phasen der Phasendrehglieder 35a, 35b. Phasendrehglieder mit 0° und 180° sind sowohl als aktive oder passive Invertierglieder 38 bekannt und können auf kostengünstige Weise realisiert werden. Mit ihnen lässt

sich diese Ausführungsform der Erfindung mit einem hohen Wert der mittleren Diversity-Effizienz von 4,2 im Beispiel sehr wirtschaftlich realisieren.

In einer besonders wirtschaftlichen Ausführungsform der Erfindung werden die Phasendrehglieder 35a und 35b in Fig. 10d bzw. in Fig. 13 in der Weise als verlustarme Hochfrequenz-Reaktanzschaltungen ausgeführt, dass sie bei einer vorgegebenen Frequenz eine hierfür ermittelte optimale Phase besitzen, so dass sich für alle Stellungen des adressierbaren Signalwahlschalters 12 und des Phasenwahlschalters 33 gemittelt ein maximaler Wert der Diversity-Effizienz ergibt. Hierbei zeigt sich der überraschende Effekt, dass sich bei dieser äußerst wirtschaftlichen Ausführungsform der Erfindung über den gesamten Frequenzbereich gemittelt ein praktisch gleich hoher Wert (im Beispiel 4,7) für die Diversity-Effizienz einstellt wie mit dem oben beschriebenen System mit getrennt optimierten Phasen für alle paarweisen Kombinationen der Antennen mit einer Anordnung gemäß Figur 11 (im Beispiel 4,8). In Figur 16a sind die Verläufe der Diversity-Effizienz für die besonders kostengünstige Lösung in Kurve 2 und dem System mit getrennt optimierten Phasen in Kurve 3 gegenüber gestellt. Die für die Realisierung von Kurve 2 notwendigen Phasenverläufe der beiden Phasendrehglieder sind in Figur 16 dargestellt. Die Gleichwertigkeit dieser beiden so unterschiedlich aufwändigen Systeme lässt sich erklären durch die Vielfalt der Richtdiagramme, welche in den summierten Ausgangssignalen 8 am Ausgang des Summationsglieds 9 bei den unterschiedlichen Stellungen des adressierbaren Signalwahlschalters 12 und des Phasenwahlschalters 33 zur Auswahl stehen. Diese Richtdiagramme können im Antennenmessfeld mit Drehstand am Ausgang des Summationsglieds 9 und somit am Empfänger 1 nachgewiesen werden. Die Beträge dieser Richtdiagramme sind, wie oben bereits erläutert in Figur 19 dargestellt. Die statistisch aus unterschiedlichen azimutalen Raumrichtungen einfallenden Nutzsignale und die ebenso aus statistisch unterschiedlichen azimutalen Raumrichtungen einfallenden unerwünschten Signale eines Nachbarkanals bzw. eines unerwünschten Gleichkanals werden durch das der jeweiligen Stellung des Signalwahlschalters 12 und des Phasenwahlschalters 33 entsprechenden Richtdiagramm nach Betrag und Phase bewertet und führen am Ausgang des Summationsglieds 9 zu einem Verhältnis von Nutz- zu Störsignal (Störabstand). Es zeigt sich nun, dass statistisch gesehen, aufgrund der Vielfalt der verfügbaren Richtdiagramme stets eine günstige Stellung der Schalter mit hohem Störabstand gefunden werden kann derart, dass sich im Mittel eine ähnlich gute Diversity-Effizienz einstellt wie mit dem aufwändigeren System. Keines der in Figur 19 dargestellten Richtdiagramme besitzt annähernd die für den mobilen Empfang in nicht vom Mehrwegempfang gestörten Gebieten stets geforderte Rundcharakteristik. Aus der alternativen Verfügbarkeit jedes der gezeigten Diagramme kann das System bei Bedarf für jede Raumrichtung das günstigste Signal auswählen, so dass sich bei einer Messung auf dem Drehstand das in Figur 18 dargestellte azimutale Richtdiagramm nachweisen lässt, welches mit einem einzigen nennenswerten Einzug von 4dB praktisch ein Runddiagramm darstellt.

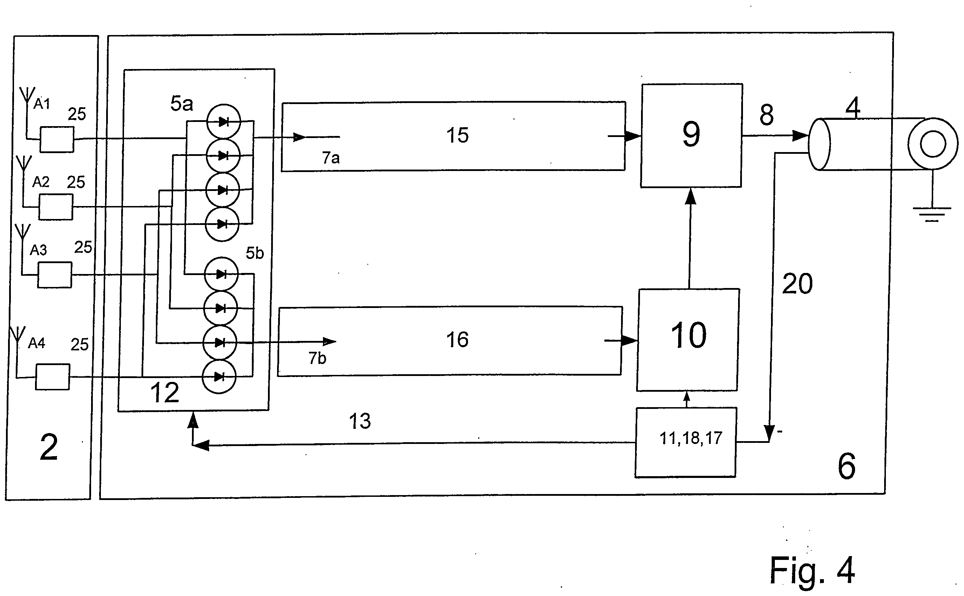

Bei der Gestaltung der Mehrantennenanlage 2 zeigt es sich als vorteilhaft, wenn die an den Eingängen des Summationsglieds 9 messbaren Richtdiagramme der Antennen $A_1$, $A_2$,..$A_N$ im azimutalen Mittelwert nicht zu sehr von einander abweichen. Um diese Abweichung nicht größer werden zu lassen als zum Beispiel 6dB, können in vorteilhafter Weise in die Antennen $A_1$, $A_2$,..$A_N$, (sh.Fig. 4) oder in die Antennenzuleitungen 2a Amplitudenkorrekturglieder 36 eingebracht werden. In Fig. 17a und b sind Richtdiagramme mit betragsmäßig azimutal gleichen Mittelwerten dargestellt.

In einer weiteren besonders vorteilhaften Ausführungsform der Erfindung werden Antennenverstärker 21a, 21b eingesetzt, wie sie im Zusammenhang mit der Anordnung in Fig. 6 beschrieben sind. Das System ist in Fig. 20 dargestellt und arbeitet nach dem Verfahren, welches im Zusammenhang mit Fig. 10d beschrieben ist. Als Besonderheit werden hierbei die Transformationsglieder 29 in den beiden Signalpfaden 15 und 16 in der Weise gestaltet, dass sich an den Eingängen des Summationsglieds 9 die notwendigen Phasenbeziehungen einstellen.

**Bezugszeichenliste**

Antennen $A_1$, $A_2$,..$A_N$
Empfänger 1
Mehrantennenanlage 2
Antennenzuleitungen 2a
Diversity-Empfangseinrichtung 3
Hochfrequenzleitung 4
Auswahlschalter 5a, 5b
Antennendiversitymodul 6
Empfangssignal 7a,b
summiertes Ausgangssignal 8
Summationsglied 9
einstellbare Phasendreheinrichtung 10
elektronische Steuereinrichtung mit Speicher 11
adressierbarer Signalwahlschalter 12
logisches Schalt-Einstellsignal 13
Phasen-Einstellsignal 14
eingangsseitiger Signalpfad 14a
Erster separater Signalpfad 15
Zweiter separater Signalpfad 16
Diversityprozessor 17
Störungsanzeigesignal 18
Auswerteschaltung 19
ZF-Signal 20
Antennenverstärker 21a, 21b
Hochohmiges Verstärkerfrontend 22a, 22b
Adress-Steuersignal 23a, 23b
Null-Schaltstellung 24a, 24b

Aktive Verstärkerelemente 25
analog einstellbares Phasendrehglied 26
Adress-Wahlsignal 27
adressierbares, digital einstellbares Phasendrehglied 28
Transformationsglieder 29a, 29b
Mehrstufiges Phasendrehglied 32
Phasenwahlschalter 33
Phasendrehglied 35, 35a, 35b
Amplitudenkorrekturglied 36
Grundphasendrehglied 37
Invertierglied 38
Pegelübertragungswerte-Matrix von diskreten Pegelübertragungswerten ($P_{a,b,i,j}$, mit j = 1, 2,..)
Pegelübertragungswert $P_{a,b,i,j}$
Phasenwertematrix von diskreten Phasendrehwinkeln $\Phi_{a,b,i}$
Phasendrehwinkel-Vektor ($\Phi_i$, mit i = 1,2,..)
Phasendrehwinkel $\Phi_{a,b,i}$
Phasendrehwinkel-Vektor $\Phi_{a,b,i}$
Schaltstellung (a = 0,1, 2..N, b = 0,1, 2,..N)

**Patentansprüche**

1. Antennendiversityanlage für den Funkempfang in Fahrzeugen, die einen Empfänger (1), mehrere Antennen (A1, A2,..AN) mit Antennenzuleitungen (2a), eine Umschalteinrichtung zur Auswahl eines anderen Empfangssignals und eine Auswerteschaltung (19) umfasst, die die Qualität des gerade zum Empfänger (1) gelangenden Empfangssignals (8) bewertet, um bei Auftreten von Störungen durch Umschalten ein anderes Empfangssignal zum Empfänger (1) zu führen, wobei durch Aufzweigen des eingangsseitigen Signalpfads (14a) mindestens ein erster und ein zweiter separater Signalpfad (15, 16) vorhanden sind und jeder der beiden separaten Signalpfade (15, 16) eingangsseitig einen adressierbaren logischen Signalwahlschalter (12) mit zwei Auswahlschaltern (5a, 5b) enthält, der mit den Antennen (A1, A2, .. AN) verbunden ist, und mit dessen unterschiedlichen Schaltstellungen (a = 0, 1, 2 .. N, b = 0,1, 2,..N) jeweils ein unterschiedliches Antennen-Empfangssignal (7a, 7b) zu mindestens einem der beiden Eingänge der Signalpfade (15, 16) geführt wird, und wobei
mit der Umschalteinrichtung bei Auftreten einer Störung im summierten Signal (8) eine andere koordinierte Einstellung der Schaltstellung (a = 0,1, 2..N, b = 0, 1, 2,..N) des adressierbaren Signalwahlschalters (12) wählbar ist,
**gekennzeichnet durch die folgenden Merkmale:**

die Umschalteinrichtung weist eine elektronische Steuereinrichtung (11) mit Speicher auf, die in einem vom Empfänger (1) getrennten, eingangsseitig mit den Antennen (A1, A2,..AN) verbundenen Antennendiversitymodul (6) angeordnet ist, das den adressierbaren logischen Signalwahlschalter (12) enthält, und das ausgangsseitig über nur eine Hochfrequenzleitung (4) mit dem Empfänger (1) verbunden ist, im Antennendiversitymodul (6) sind die Ausgangssignale des ersten und des zweiten separaten Signalpfads (15, 16) den Eingängen eines im Antennendiversitymodul (6) angeordneten Summationsglieds (9) zugeführt, wobei das summierte Signal (8) von dem Antennendiversitymodul (6) zu dem Empfänger (1) über die eine Hochfrequenzleitung (4) zugeführt ist, mindestens einer der separaten Signalpfade (14a, 15, 16) enthält eine in der Phasenwinkeldrehung fest einstellbare Phasendreheinrichtung (10), deren fest eingestellter Phasendrehwinkel jeweils durch Umschalten geändert wird, mit dem Effekt, dass - wenn bei mindestens einer der Schalterstellungen des Signalwahlschalters (12) das Empfangssignal einer der Antennen (A1, A2,..AN) zu einem der beiden Eingänge des Summationsgliedes (9) durchgeschaltet ist, das Empfangssignal einer anderen der Antennen (A1, A2,..AN) erst die fest eingestellte Phasendreheinrichtung (10) durchläuft und dann zum anderen der beiden Eingänge des Summationsgliedes (9) durchgeschaltet wird, wobei

- die Steuereinrichtung (11) mit Speicher zum koordinierten Einstellen von diskreten Phasendrehwinkeln $\Phi_i$ der Phasendrehrichtung (10) dient, die jeweils einer bestimmten Schaltstellung (a = 0,1, 2..N, b = 0, 1, 2,..N) des adressierbaren Signalwahlschalters (12) fest zugeordnet und als Phasenvektor (i = 1, 2,...) im Speicher der elektronischen Steuereinrichtung (11) abgelegt sind, wodurch in der Steuereinrichtung (11) über die Schaltstellungen (a = 0,1, 2..N, b = 0, 1, 2,..N) eine Phasenwertematrix von diskreten Phasendrehwinkeln ($\Phi_{a,b,i}$) abgelegt ist,
- bei Auftreten einer Störung im summierten Signal (8) - bei der ein Störungsanzeigesignal (18) der Auswerteschaltung (19) zur elektronischen Steuereinrichtung (11) geleitet wird - mit der Umschalteinrichtung eine andere koordinierte Einstellung der Schaltstellung (a = 0,1, 2..N, b = 0, 1, 2,..N) des adressierbaren Signalwahlschalters (12) und des zugeordneten diskreten Phasendrehwinkels $\Phi_{a,b,i}$ wählbar ist.

2. Antennendiversityanlage nach Anspruch 1, **dadurch gekennzeichnet, dass** der Phasendrehwinkel-Vektor ($\Phi_i$, mit i = 1, 2,..) von diskreten Phasendrehwinkeln $\Phi_i$ der einstellbaren Phasendreheinrichtung (10), der jeweils einer bestimmten Schaltstellung (a = 0,1, 2..N, b = 0, 1, 2,..N) des adressierbaren Signalwahlschalters (12) fest zugeordnet ist, aus I < 5 unterschiedlichen Phasendrehwinkeln $\Phi_i$ mit gleichen Phasenwinkelunterschieden von $2\pi/I$ gebildet ist.

3. Antennendiversityanlage nach einem der Ansprüche 1 oder 2, **dadurch gekennzeichnet,**

    - **dass** die fest einstellbare Phasendreheinrichtung (10) als spannungsgesteuertes, analog einstellbares Phasendrehglied (26) gestaltet ist und
    - **dass** in der Steuereinrichtung (11) mit Speicher zum einen eine Spannung als Phasen-Einstellsignal (14) erzeugt wird, die dem analog einstellbaren Phasendrehglied zur Einstellung des jeweils betreffenden diskreten, fest einstellbaren Phasendrehwinkels $\Phi_{a,b,i}$ zugeführt wird, und zum anderen ein dazugehöriges logisches Schalt-Einstellsignal (13) zur Einstellung der zugeordneten Schaltstellung (a = 0,1, 2..N, b = 0,1,2,..N) des adressierbaren Signalwahlschalters (12).

4. Antennendiversityanlage wie in Anspruch 1, **dadurch gekennzeichnet, dass** die fest einstellbare Phasendreheinrichtung (10) als adressierbares, digital einstellbares Phasendrehglied (28) gestaltet ist und dass das Phasen-Einstellsignal (14) dementsprechend ein logisches Adresssignal darstellt.

5. Antennendiversityanlage nach einem der Ansprüche 1 bis 4, **dadurch gekennzeichnet, dass** die Auswerteschaltung (19) zum Erfassen der Empfangsqualität dadurch gebildet ist, dass das aus dem Summensignal (8) im Empfänger (1) abgeleitete ZF-Signal (20) in dem Antennendiversitymodul (6) einem Diversityprozessor (17) zum extrem raschen Erkennen einer Störung zugeführt wird, dessen Störungsanzeigesignal (18) in der Steuereinrichtung (11) mit Speicher gleichzeitig die Einstellung einer anderen Schaltstellung (a = 0,1, 2..N, b = 0, 1, 2,..N) des adressierbaren Signalwahlschalters (12) und des dieser Schaltstellung (a = 0,1, 2..N, b = 0, 1, 2,..N) zugeordneten, diskreten Phasendrehwinkels $\Phi_{a,b,i}$ der Phasendreheinrichtung (10) veranlasst.

6. Antennendiversityanlage wie in Anspruch 5, **dadurch gekennzeichnet, dass** die Auswerteschaltung (19) zum Erfassen der Empfangsqualität dadurch gebildet ist, dass der Diversityprozessor (17) im Empfänger (1) untergebracht ist und dass das Störungsanzeigesignal (18) dem Antennendiversitymodul (6) und der elektronischen Steuereinrichtung (11) mit Speicher zugeleitet wird.

**7.** Antennendiversityanlage wie in Anspruch 6, **dadurch gekennzeichnet,**

- **dass** im Diversityprozessor (17) ein Logikprozessor mit Gedächtnis vorhanden ist, in dem die Intensität und die Häufigkeit von Empfangsstörungen, die bei den verfügbaren Kombinationen aus den Schaltstellungen (a = 0,1, 2..N, b = 0,1, 2,..N) des Signalwahlschalters (12) und den diskreten Phasendrehwinkeln $\Phi a,b,i$ der Phasendreheinrichtung (10) auftreten, laufend erfasst und aktualisiert werden und dass daraus fortschreibend eine Prioritätenliste hinsichtlich der Rangfolge - beginnend mit der am wenigsten gestörten Kombination - gebildet wird, und
- **dass** das Störungsanzeigesignal (18) als logisches Adress-Wahlsignal (27) zur gezielten Auswahl der in der elektronischen Steuereinrichtung (11) mit Speicher abgelegten Kombinationen von Schaltstellungen (a = 0,1, 2..N, b = 0,1, 2,..N) und Phasendrehwinkeln $\Phi a,b,i$ in der Weise ausgebildet ist, dass bei Auftreten einer Störung an Hand der gebildeten Rangfolge gezielt auf eine andere Kombination umgeschaltet wird, die einen störungsarmen Empfang ermöglicht.

**8.** Antennendiversityanlage nach Anspruch 7, **dadurch gekennzeichnet, dass** der Diversityprozessor (17) im Empfänger (1) angeordnet ist und dass das Adress-Wahlsignal (27) über die Hochfrequenzleitung (4) dem Antennendiversitymodul (6) mit der elektronischen Steuereinrichtung (11) mit Speicher zugeführt wird.

**9.** Antennendiversityanlage nach einem der Ansprüche 1 bis 8, **dadurch gekennzeichnet, dass** in den Antennen (A1, A2,..AN) zur Signalverstärkung und zur Entkopplung der Antennen gegeneinander im Hinblick auf die durch die Umschaltungen bewirkten Laständerungen aktive Verstärkerelemente (25) enthalten sind und dass die im adressierbaren Signalwahlschalter (12) befindlichen Auswahlschalter (5a, 5b) durch Schaltdioden gebildet sind.

**10.** Antennendiversityanlage nach einem der Ansprüche 1 bis 8, **dadurch gekennzeichnet, dass** die Antennen (A1, A2,..AN) als passive Antennen ausgebildet sind und dass an den Eingängen des ersten Signalpfads (15) und des zweiten Signalpfads (16) jeweils ein Antennenverstärker (21a, 21b) mit eingangsseitig hochohmigem Verstärkerfrontend (22a, 22b) angeordnet ist.

**11.** Antennendiversityanlage nach Anspruch 10, **dadurch gekennzeichnet,**

- **dass** zum Ausgleich des Frequenzgangs der als passive Antennen ausgeführten Antennen (A1, A2,..AN) im Antennenverstärker (21a, 21b) Transformationsglieder (29a, 29b) angeordnet sind, die logisch adressierbar einzustellen sind und
- **dass** in der elektronischen Steuereinrichtung (11) mit Speicher Adress-Steuersignale (23a, 23b) gebildet werden, durch die bei Anschalten einer der Antennen (A1, A2,..AN) im betreffenden Antennenverstärker (21a, 21b) die zugehörige Einstellung zur Kompensation des Frequenzgangs am Transformationsglied (29a, 29b) bewirkt wird.

**12.** Antennendiversityanlage nach Anspruch 11, **dadurch gekennzeichnet, dass** die als passive Antennen ausgeführten Antennen (A1, A2,..AN) als leitende Strukturen auf der Fensterscheibe eines Fahrzeugs ausgeführt sind, deren Anschlüsse über Verbindungsleitungen mit dem auf der Fensterscheibe befindlichen Antennendiversitymodul (6) verbunden sind, und dass die Hochfrequenzleitung (4) die einzige Signalverbindung zum weiter entfernten Empfänger bildet.

**13.** Antennendiversityanlage nach Anspruch 1, **dadurch gekennzeichnet,**

- **dass** in mindestens einem der beiden Signalpfade (15, 16) zur Variation des Empfangssignalpegels eine Pegelübertragungs-Einstelleinrichtung (30) vorhanden ist und
- in der elektronischen Steuereinrichtung (11) mit Speicher eine Pegelübertragungswerte-Matrix für unterschiedliche diskrete Pegelübertragungswerte (Pa,b,i,j, mit j = 1, 2,..) abgelegt ist, zum Zweck der koordinierten Einstellung von unterschiedlichen diskreten Pegelübertragungswerten jeweils für eine Kombination aus einer bestimmten Schaltstellung (a = 0,1, 2..N, b = 0,1, 2,..N) des adressierbaren Signalwahlschalters (12) und einem diskreten Phasendrehwinkel $\Phi a,b,i$ und
- **dass** hierfür ein Pegelübertragungs-Einstellsignal (31) gebildet wird, durch das in der Pegelübertragungs-Einstelleinrichtung (30) der entsprechende Pegelübertragungswert (Pa,b,i,j) eingestellt wird.

**14.** Antennendiversityanlage nach Anspruch 1, **dadurch gekennzeichnet,**

- **dass** die einstellbare Phasendreheinrichtung (10) aus mindestens zwei Phasendrehgliedern (35a, 35b) mit fest eingestellten Phasenwinkeln und einem nachgeschalteten steuerbaren Phasenwahlschalter (33) zur alternativen Auswahl eines der Ausgangssignale der Phasendrehglieder (35a, 35b) besteht und
- **dass** in der Steuereinrichtung (11) mit Speicher zum einen ein Signal als Phasen-Einstellsignal (14) erzeugt wird, das dem analog einstellbaren Phasendrehglied zur Einstellung des jeweils betreffenden diskreten Phasendrehwinkeln Φa,b,i zugeführt wird, und zum anderen ein dazugehöriges logisches Schalt-Einstellsignal (13) zum Einstellen der zugeordneten Schaltstellung (a = 0,1, 2..N, b = 0, 1, 2,..N) des adressierbaren Signalwahlschalters (12).

15. Antennendiversityanlage nach Anspruch 14, **dadurch gekennzeichnet, dass** an Stelle der Phasendrehglieder (35a, 35b) ein zusammengefasstes, mehrstufiges Phasendrehglied (32) mit einer Mehrzahl von Ausgängen mit nachgeschaltetem, entsprechend mehrstufigem Phasenwahlschalter (33) verwendet wird.

16. Antennendiversityanlage nach Anspruch 15, **dadurch gekennzeichnet, dass** die mit den verschiedenen Stufen des mehrstufigen Phasendrehglieds (32) in Verbindung stehenden Phasendrehungen in der Weise eingestellt sind, dass jeweils zwei im Hinblick auf den Diversity-Gewinn optimierte Phasen für die möglichen paarweisen Kombinationen der Antennen A1, A2,..AN verfügbar sind.

17. Antennendiversityanlage nach Anspruch 14, **dadurch gekennzeichnet, dass** zwei Phasendrehglieder (35a, 35b) mit fest eingestellten Phasenwinkeln mit als Wechselschalter gebildetem Phasenwahlschalter (33) vorhanden sind, und dass die Phasenwinkel in der Weise gebildet werden, dass sich für Mittelwerte aller Stellungen des adressierbaren Signalwahlschalters (12) und des Phasenwahlschalters (33) bei einer vorgegebenen Frequenz ein maximierter Wert des Diversity-Gewinns ergibt.

18. Antennendiversityanlage nach Anspruch 17, **dadurch gekennzeichnet, dass** die beiden Phasendrehglieder (35a, 35b) als verlustarme Hochfrequenz-Reaktanzschaltungen ausgeführt sind, und die Frequenzabhängigkeit ihrer Phasen so gestaltet ist, dass der Diversity-Gewinn bei jeder Frequenz maximiert ist.

19. Antennendiversityanlage nach Anspruch 18 in Verbindung mit den Ansprüchen 10 und 11, **dadurch gekennzeichnet, dass** die im Antennenverstärker (21a, 21b) mit eingangsseitig hochohmigem Verstärkerfrontend (22a, 22b) vorhandenen Transformationsglieder (29a, 29b) in den beiden Signalpfaden (15, 16) zusätzlich in der Weise ausgebildet sind, dass sich an den Eingängen des Summationsglieds (9) die für die Maximierung notwendigen Phasenbeziehungen einstellen.

20. Antennendiversityanlage nach Anspruch 18, **dadurch gekennzeichnet,**

- **dass** die beiden Phasendrehglieder (35a, 35b) die Phasenwerte 0° und 180° besitzen,
- **dass** kostengünstig ein aktives oder passives Invertierglied (38) verwendet wird und
- **dass** zusätzlich ein Grundphasendrehglied (37) vorhanden ist, dessen Phase frequenzabhängig für einen maximierten Diversity-Gewinn gebildet wird.

21. Antennendiversityanlage nach Anspruch 1, **dadurch gekennzeichnet, dass** in die Antennen A1, A2,..AN oder in die Antennenzuleitungen (2a) Amplitudenkorrekturglieder (36) eingebunden sind, welche Abweichungen der azimutalen Mittelwerte der Strahlungsdiagramme der Antennen A1, A2,..AN ausgleichen.

22. Antennendiversityanlage nach Anspruch 1, **dadurch gekennzeichnet, dass** mindestens eine fest eingestellte Phasendreheinrichtung (10) in den eingangsseitigen Signalpfad (14a) zur Drehung des Phasenwinkels eines Antennensignals in der Zuleitung zum adressierbaren logischen Signalwahlschalter (12) eingebunden ist.

23. Antennendiversityanlage nach Anspruch 22, **dadurch gekennzeichnet, dass** bei Vorhandensein von N Antennen in die N-1 Zuleitungen zum adressierbaren logischen Signalwahlschalter (12) fest eingestellte Phasendreheinrichtungen (10) eingebunden sind, die als Phasendrehglieder (35a, 35b,35c) und als verlustarme HF-Reaktanzschaltungen derart ausgeführt sind, so dass die Frequenzabhängigkeit ihrer Phasenwerte den jeweils grösstmöglichen Diversity-Gewinn bei jeder Frequenz ergibt.

## Claims

1. An antenna diversity system for radio reception in vehicles which comprises a receiver (1), a plurality of antennas (A1, A2,..AN) having antenna feed lines (2a), a switchover device for selecting another received signal, and an evaluation circuit (19) which evaluates the quality of the received signal (8) just arriving at the receiver (1) to guide another received signal to the receiver (1) by a switching over on the occurrence of interference, wherein at least one first separate signal path and one second separate signal path (15, 16) are present due to the branching off of the input-side signal path (14a) and each of the two separate signal paths (15, 16) includes an addressable logical signal selection switch (12) at the input side which has two selection switches (5a, 5b), which is connected to the antennas (A1, A2, .. AN) and by whose different switch positions (a = 0, 1, 2 .. N, b = 0, 1, 2,..N) a respective different received antenna signal (7a, 7b) is guided to at least one of the two inputs of the signal paths (15, 16), and wherein a different coordinated setting of the switch position (a = 0, 1, 2..N, b = 0, 1, 2,..N) of the addressable signal selection switch (12) can be selected by the switchover device on the occurrence of interference in the summed signal (8),

**characterized by the following features:**

the switchover device has an electronic control device (11) which has a memory and which is arranged in an antenna diversity module (6) which is separate from the receiver (1) and is connected to the antennas (A1, A2,..AN) at the input side, which includes the addressable logical signal selection switch (12) and which is connected to the receiver (1) via only one radio frequency line (4) at the output side,

output signals of the first and second separate signal paths (15, 16) are supplied in the antenna diversity module (6) to inputs of a summation member (9) arranged in the antenna diversity module (6), with the summed signal (8) being supplied from the antenna diversity module (6) to the receiver (1) via the one radio frequency line (4),

at least one of the separate signal paths (14a, 15, 16) includes a phase rotation device (10) which can be fixedly set in phase angle rotation and whose fixedly set phase rotation angle is respectively changed by a switching over with the effect that - when the received signal of one of the antennas (A1, A2,..AN) is switched through to one of the two inputs of the summation member (9) in at least one of the switch settings of the signal selection switch (12) - the received signal of another one of the antennas (A1, A2,..AN) first passes through the fixedly set phase rotation device (10) and is then switched through to the other one of the two inputs of the summation member (9), wherein

- the control device (11) which has a memory serves for a coordinated setting of discrete phase rotation angles $\Phi i$ of the phase rotation device (10) which are fixedly associated with a respective specific switch position (a = 0, 1, 2..N, b = 0, 1, 2,..N) of the addressable signal selection switch (12) and are stored as a phase vector (i = 1, 2,...) in the memory of the electronic control device (11), whereby a phase value matrix of discrete phase rotation angles ($\Phi a,b,i$) is stored in the control device (11) via the switch positions (a = 0, 1, 2..N, b = 0, 1, 2,..N),

- wherein a different coordinated setting of the switch position (a = 0, 1, 2..N, b = 0, 1, 2,..N) of the addressable signal selection switch (12) and of the associated discrete phase rotation angle $\Phi a,b,i$ can be selected by the switchover device on the occurrence of an interference in the summed signal (8) - at which an interference display signal (18) of the evaluation circuit (19) is conducted to the electronic control device (11).

2. An antenna diversity system in accordance with claim 1, **characterized in that** the phase rotation angle vector ($\Phi i$, where i = 1, 2,..) of discrete phase rotation angles $\Phi i$ of the settable phase rotation device (10) which is fixedly associated with a respective specific switch position (a = 0, 1, 2..N, b = 0, 1, 2,..N) of the addressable signal selection switch (12), is formed from I < 5 different phase rotation angles $\Phi i$ having the same phase angle differences of $2\pi/I$.

3. An antenna diversity system in accordance with one of the claims 1 or 2, **characterized in that**

- the fixedly settable phase rotation device (10) is configured as a voltage-controlled, analogously settable phase rotation element (26); and
- **in that**, in the control device (11) which has a memory, a voltage is generated as a phase setting signal (14), on the one hand, said voltage being supplied to the analogously settable phase rotation element to set the respective discrete, fixedly settable phase rotation angle $\Phi a,b,i$, in question, and an associated logical switch setting signal (13) for setting the associated switch position (a = 0, 1, 2..N, b = 0, 1,2,..N) of the addressable signal selection switch (12) is generated, on the other hand.

4. An antenna diversity system in accordance with claim 1, **characterized in that** the fixedly settable phase rotation device (10) is configured as an addressable, digitally settable phase rotation element (28), and **in that** the phase setting signal (14) accordingly represents a logical address signal.

5. An antenna diversity system in accordance with any one of the claims 1 to 4, **characterized in that** the evaluation circuit (19) for detecting the reception quality is configured **in that** the IF signal (20) in the antenna diversity module (6) which is derived from the sum signal (8) in the receiver (1) is supplied for a very rapid recognition of interference to a diversity processor (17) whose interference display signal (18) in the control device (11) which has a memory simultaneously causes the setting of another switch position (a = 0, 1, 2..N, b = 0, 1, 2,..N) of the addressable signal selection switch (12) and the setting of the discrete phase rotation angle $\Phi a,b,i$ of the phase rotation device (10) associated with this switch position (a = 0, 1, 2..N, b = 0, 1, 2,..N).

6. An antenna diversity system in accordance with claim 5, **characterized in that** the evaluation circuit (19) for detecting the reception quality is configured **in that** the diversity processor (17) is accommodated in the receiver (1) and **in that** the interference display signal (18) is forwarded to the antenna diversity module (6) and to the electronic control device (11) which has a memory.

7. An antenna diversity system in accordance with claim 6, **characterized in that**

- a logic processor which has a memory is present in the diversity processor (17), in which logic processor the intensity and the frequency of reception interference occurring in the available combinations composed of the switch positions (a = 0, 1, 2..N, b = 0, 1, 2,..N) of the signal selection switch (12) and composed of the discrete phase rotation angles $\Phi a,b,i$ of the phase rotation device (10) are continuously detected and updated, and **in that** a priority list is formed from this in a continuously adjusted manner with respect to the ranking order - starting with the combination least interfered, and
- **in that** the interference display signal (18) is configured as a logical address selection signal (27) for a direct selection of the combinations composed of switch positions (a = 0, 1, 2..N, b = 0, 1, 2,..N) and phase rotation angles $\Phi a,b,i$ stored in the electronic control device (11) which has a memory in such a manner that, on the occurrence of interference, a switchover is made directly to a different combination which enables a low-interference reception with reference to the produced ranking order.

8. An antenna diversity system in accordance with claim 7, **characterized in that** the diversity processor (17) is arranged in the receiver (1); and **in that** the address selection signal (27) is supplied via the radio frequency line (4) to the antenna diversity module (6) with the electronic control device (11) which has a memory.

9. An antenna diversity system in accordance with any one of the claims 1 to 8, **characterized in that** active amplifier elements (25) are included in the antennas (A1, A2,..AN) for signal amplification and for decoupling the antennas from one another with respect to the load changes effected by the switchovers, and **in that** the selection switches (5a, 5b) located in the addressable signal selection switch (12) are formed by switching diodes.

10. An antenna diversity system in accordance with any one of the claims 1 to 8, **characterized in that** the antennas (A1, A2,..AN) are configured as passive antennas; and **in that** a respective antenna amplifier (21a, 21b) having an amplifier front end (22a, 22b) which is of high ohmage at the input side is arranged at the inputs of the first signal path (15) and of the second signal path (16).

11. An antenna diversity system in accordance with claim 10, **characterized in that**

- transformation members (29a, 29b) which are to be set in a logically addressable manner are arranged in the antenna amplifier (21a, 21b) to compensate the frequency response of the antennas (A1, A2,..AN) configured as passive antennas, and
- **in that** address control signals (23a, 23b) are formed in the electronic control device (11) which has a memory, by which address control signals (23a, 23b) the associated setting for the compensation of the frequency response is effected at the transformation member (29a, 29b) in the respective antenna amplifier (21a, 21b) on the switching on of one of the antennas (A1, A2,..AN).

12. An antenna diversity system in accordance with claim 11, **characterized in that** the antennas (A1, A2,..AN) configured as passive antennas are configured as conductive structures on the window pane of a vehicle, with the connections of said conductive structures being connected via connection lines to the antenna diversity module (6) located on the window pane; and **in that** the radio frequency line (4) forms the only signal connection to the receiver which is further remote.

13. An antenna diversity system in accordance with claim 1, **characterized in that**

- a level transmission setting device (30) is present in at least one of the two signal paths (15, 16) to vary the received signal level, and
- **in that** a level transmission value matrix for different discrete level transmission values ($Pa,b,i,j$, where j = 1, 2,..) is stored in the electronic control device (11) which has a memory for the purpose of the coordinated setting of different discrete level transmission values in each case for a combination of a specific switch position (a = 0, 1, 2..N, b = 0, 1, 2,..N) of the addressable signal selection switch (12) and a discrete phase rotation angle $\Phi a,b,l$, and
- **in that** a level transmission setting signal (31) is formed for this purpose by which the corresponding level transmission value ($Pa,b,i,j$) is set in the level transmission setting device (30).

14. An antenna diversity system in accordance with claim 1, **characterized in that**

- the settable phase rotation device (10) comprises at least two phase rotation elements (35a, 35b) having fixedly set phase angles and a controllable phase selection switch (33) connected downstream for an alternative selection of one of the output signals of the phase rotation elements (35a, 35b) and
- **in that**, in the control device (11) which has a memory, a signal is generated as a phase setting signal (14), on the one hand, said phase setting signal being supplied to the analogously settable phase rotation element to set the respective discrete phase rotation angle Φa,b,i, in question, and an associated logical switch setting signal (13) for setting the associated switch position (a = 0, 1, 2..N, b = 0, 1,2,..N) of the addressable signal selection switch (12) is generated, on the other hand.

15. An antenna diversity system in accordance with claim 14, **characterized in that** a combined, multi-stage phase rotation element (32) having a plurality of outputs and having a correspondingly multi-stage phase selection switch (33) connected downstream is used instead of the phase rotation elements (35a, 35b).

16. An antenna diversity system in accordance with claim 15, **characterized in that** the phase rotations in communication with the different stages of the multi-stage phase rotation element (32) are set in such a manner that respectively two phases which are optimized with respect to the diversity gain are available for the possible pair-wise combinations of the antennas A1, A2,..AN.

17. An antenna diversity system in accordance with claim 14, **characterized in that** two phase rotation elements (35a, 35b) are present having fixedly set phase angles and having a phase selection switch (33) configured as a toggle switch, and **in that** the phase angles are formed in such a manner that a maximized value of the diversity gain results at a predefined frequency for mean values of all the positions of the addressable signal selection switch (12) and of the phase selection switch (33).

18. An antenna diversity system in accordance with claim 17, **characterized in that** the two phase rotation elements (35a, 35b) are configured as low-loss radio frequency reactance circuits, and **in that** the frequency dependence of their phases is designed such that the diversity gain is maximized at every frequency.

19. An antenna diversity system in accordance with claim 18 in conjunction with claims 10 and 11, **characterized in that** the transformation members (29a, 29b) present in the antenna amplifier (21a, 21b) having an amplifier front end (22a, 22b) which is of high ohmage at the input side are additionally configured in the two signal paths (15, 16) in such a manner that the phase relationships necessary for the maximization are adopted at the inputs of the summation member (9).

20. An antenna diversity system in accordance with claim 18, **characterized in that**

- the two phase rotation elements (35a, 35b) have the phase values 0° and 180°,
- **in that** an active or a passive inversion member (38) is used inexpensively, and
- **in that** a base phase rotation element (37) is additionally present whose phase is formed in a frequency-dependent manner for a maximized diversity gain.

21. An antenna diversity system in accordance with claim 1, **characterized in that** amplitude correction members (36) are integrated into the antennas A1, A2,..AN or into the antenna feed lines (2a) and compensate deviations of the azimuthal mean values of the radiation patterns of the antennas A1, A2,..AN.

22. An antenna diversity system in accordance with claim 1, **characterized in that** at least one fixedly set phase rotation device (10) is integrated into the input-side signal path (14a) for the rotation of the phase angle of an antenna signal in the feed line to the addressable logical signal selection switch (12).

23. An antenna diversity system in accordance with claim 22, **characterized in that**, on the presence of N antennas, fixedly set phase rotation devices (10) are integrated into the N-1 feed lines to the addressable logical signal selection switch (12) and are configured as phase rotation elements (35a, 35b, 35c) and as low-loss RF reactance circuits such that the frequency dependence of their phase values results in the respective largest possible diversity gain at every frequency.

**Revendications**

1. Installation d'antenne en diversité pour la réception radiodiffusée dans des véhicules, qui comprend un récepteur (1), plusieurs antennes (A1, A2, .. AN) à lignes d'alimentation (2a), un moyen de commutation pour sélectionner un autre signal de réception, et un circuit d'évaluation (19) qui évalue la qualité du signal de réception (8) en train de parvenir au récepteur (1), afin d'amener, par commutation, un autre signal de réception jusqu'au récepteur en cas d'apparition de perturbations,

dans laquelle

par subdivision du trajet de signal (14a) côté entrée, il existe au moins un premier et un second trajet de signal séparés (15, 16), et chacun des deux trajets de signal séparés (15, 16) comprend du côté entrée un sélecteur de signal (12) logique adressable ayant deux commutateurs de sélection (5a, 5b) et relié aux antennes (A1, A2, .. AN) et dont les différentes positions de commutation (a = 0, 1, 2 .. N, b = 0, 1, 2, .. N) permettent d'amener respectivement différents signaux de réception d'antenne (7a, 7b) à l'une au moins des deux entrées des trajets de signal (15, 16), et

en cas d'apparition d'une perturbation, le moyen de commutation permet de sélectionner dans le signal sommé (8) un autre réglage coordonné de la position de commutation (a = 0, 1, 2 .. N, b = 0, 1, 2, .. N) du sélecteur de signal (12) adressable,

**caractérisée par** les éléments suivants :

le moyen de commutation comprend un moyen de commande électronique (11) à mémoire, qui est agencé dans un module d'antenne en diversité (6) séparé du récepteur (1) et relié du côté entrée aux antennes (A1, A2, .. AN), qui comprend le sélecteur de signal (12) logique adressable et qui est relié du côté sortie au récepteur (1) via une seule ligne haute-fréquence (4), dans le module d'antenne en diversité (6), les signaux de sortie des premier et second trajets de signal séparés (15, 16) sont amenés aux entrées d'un organe de sommation (9) agencé dans le module d'antenne en diversité (6), le signal sommé (8) étant amené du module d'antenne en diversité (6) au récepteur (1) via ladite une ligne haute fréquence (4),

l'un au moins des trajets de signal séparés (14a, 15, 16) comprend un moyen de rotation de phase (10) fermement réglable en rotation de phase, dont l'angle de rotation de phase réglé fermement est modifié par une commutation respective, ayant pour effet que, lorsque le signal de réception de l'une des antennes (A1, A2, .. AN) est transmis à l'une des deux entrées de l'organe de sommation (9) dans l'une au moins des positions de commutation du sélecteur de signal (12), le signal de réception d'une autre parmi les antennes (A1, A2, .. AN) parcourt tout d'abord le moyen de rotation de phase (10) réglé fermement et est alors transmis à l'autre des deux entrées de l'organe de sommation (9), et

- le moyen de commande (11) à mémoire sert au réglage coordonné d'angles de rotation de phase discrets Φi du moyen de rotation de phase (10), qui sont chacun associés fermement à une position de commutation déterminée (a = 0, 1, 2, .. N, b = 0, 1, 2, .. N) du sélecteur de signal (12) adressable et qui sont stockés en tant que vecteur de phase (i = 1, 2, ...) dans la mémoire du moyen de commande électronique (11), moyennant quoi une matrice de valeurs de phase d'angles de rotation de phase discrets (Φa, b, i) est stockée dans le moyen de commande (11) via les positions de commutation (a = 0, 1, 2, .. N, b = 0, 1, 2, .. N),

- en cas d'apparition d'une perturbation dans le signal sommé (8), un signal d'indication de perturbation (18) du circuit d'évaluation (19) étant amené au moyen de commande électronique (11), le moyen de commutation permet de sélectionner un autre réglage coordonné de la position de commutation (a = 0, 1, 2, .. N, b = 0, 1, 2, .. N) du sélecteur de signal (12) adressable et de l'angle de rotation de phase discret associé Φa, b, i.

2. Installation d'antenne en diversité selon la revendication 1,
**caractérisée en ce que**
le vecteur d'angle de rotation de phase (Φi, avec i = 1, 2, ..) d'angles de rotation de phase discrets Φi du moyen de rotation de phase (10) réglable, vecteur qui est associé fermement à une position de commutation déterminée respective (a = 0, 1, 2, .. N, b = 0, 1, 2, .. N) du sélecteur de signal (12) adressable est formé par I < 5 différents angles de rotation de phase Φi ayant des différences d'angle de phase de $2\pi/I$.

3. Installation d'antenne en diversité selon l'une des revendications 1 ou 2,
**caractérisée en ce que**

- le moyen de rotation de phase (10) fermement réglable est conçu sous forme d'organe de rotation de phase (26) commandé en tension, réglable par voie analogique, et
- dans le moyen de commande (11) à mémoire, d'une part une tension est générée en tant que signal de réglage de phase (14) qui est amené au moyen de rotation de phase (10) réglable par voie analogique pour régler l'angle de rotation de phase discret concerné Φa, b, i fermement réglable, et d'autre part un signal de réglage de commutation (13) logique correspondant est généré pour régler la position de commutation associée (a = 0, 1, 2, .. N, b = 0, 1, 2, .. N) du sélecteur de signal (12) adressable.

**4.** Installation d'antenne en diversité selon la revendication 1,
**caractérisée en ce que**
le moyen de rotation de phase (10) fermement réglable est conçu sous forme d'organe de rotation de phase (28) adressable réglable par voie numérique, et **en ce que**
le signal de réglage de phase (14) représente en correspondance un signal d'adresse logique.

**5.** Installation d'antenne en diversité selon l'une des revendications 1 à 4,
**caractérisée en ce que**
le circuit d'évaluation (19) pour détecter la qualité de réception est formé du fait que le signal ZF (20) dérivé du signal sommé (8) dans le récepteur (1) est amené, dans le module d'antenne en diversité (6), à un processeur en diversité (17) pour la reconnaissance extrêmement rapide d'une perturbation, dont le signal d'indication de perturbation (18) provoque dans le moyen de commande (11) à mémoire simultanément le réglage d'une autre position de commutation (a = 0, 1, 2, .. N, b = 0, 1, 2, .. N) du sélecteur de signal (12) adressable et de l'angle de rotation de phase discret Φa, b, i du moyen de rotation de phase (10), associé à ladite position de commutation (a = 0, 1, 2, .. N, b = 0, 1, 2, .. N).

**6.** Installation d'antenne en diversité selon la revendication 5,
**caractérisée en ce que**
le circuit d'évaluation (19) pour détecter la qualité de réception est formé du fait que le processeur en diversité (17) est logé dans le récepteur (1), et que le signal d'indication de perturbation (18) est amené au module d'antenne en diversité (6) et au moyen de commande électronique (11) à mémoire.

**7.** Installation d'antenne en diversité selon la revendication 6,
**caractérisée en ce que**

- dans le processeur en diversité (17), il est prévu un processeur logique à mémoire permettant de détecter et de mettre à jour en continu l'intensité et la fréquence de perturbations de réception qui apparaissent dans les combinaisons disponibles des positions de commutation (a = 0, 1, 2, .. N, b = 0, 1, 2, .. N) du sélecteur de signal (12) et des angles de rotation de phase discrets Φa, b, i du moyen de rotation de phase (10), et d'en établir progressivement une liste de priorités quant à l'ordre hiérarchique, à commencer par la combinaison la moins perturbée, et
- le signal d'indication de perturbation (18) est réalisé sous forme de signal de sélection d'adresse (27) logique pour la sélection ciblée des combinaisons de positions de commutation (a = 0, 1, 2 .. N, b = 0,. 1, 2, N) et d'angles de rotation de phase Φa, b, i, stockées dans le moyen de commande électronique (11) à mémoire, de telle sorte que lors de l'apparition d'une perturbation, une autre combinaison permettant une réception avec peu de perturbation est commutée de façon ciblée à la base de l'ordre hiérarchique établi.

**8.** Installation d'antenne en diversité selon la revendication 7,
**caractérisée en ce que**
le processeur en diversité (17) est agencé dans le récepteur (1), et **en ce que**
le signal de sélection d'adresse (27) est amené via la ligne haute-fréquence (4) au module d'antenne en diversité (6) muni du moyen de commande électronique (11) à mémoire.

**9.** Installation d'antenne en diversité selon l'une des revendications 1 à 8,
**caractérisée en ce que**
des éléments amplificateurs actifs (25) sont contenus dans les antennes (A1, A2, .. AN) pour amplifier le signal et pour découpler les antennes mutuellement à l'égard des modifications de charge causées par les commutations, et **en ce que**
les commutateurs de sélection (5a, 5b) situés dans le sélecteur de signal (12) adressable sont formés par des diodes de commutation.

**10.** Installation d'antenne en diversité selon l'une des revendications 1 à 8,
**caractérisée en ce que**
les antennes (A1, A2, .. AN) sont réalisées sous forme d'antennes passives, et **en ce que**
aux entrées du premier trajet de signal (15) et du second trajet de signal (16), il est prévu respectivement un amplificateur d'antenne (21a, 21b) ayant une extrémité frontale d'amplification (22a, 22b) à haute valeur ohmique du côté entrée.

**11.** Installation d'antenne en diversité selon la revendication 10,
**caractérisée en ce que**

- pour compenser la réponse en fréquence des antennes (A1, A2, .. AN) réalisées sous forme d'antennes passives, des organes de transformation (29a, 29b) sont agencés dans l'amplificateur d'antenne (21a, 21b), qui sont à régler de façon adressable logiquement, et **en ce que**
- des signaux de commande d'adresse (23a, 23b) sont formés dans le moyen de commande électronique (11) à mémoire, qui provoquent le réglage associé pour compenser la réponse en fréquence au niveau de l'organe de transformation (29a, 29b) lors d'une mise en circuit de l'une des antennes (A1, A2, .. AN) dans l'amplificateur d'antenne concerné (21a, 21b).

**12.** Installation d'antenne en diversité selon la revendication 11,
**caractérisée en ce que**
les antennes (A1, A2, .. AN) réalisées sous forme d'antennes passives sont réalisées sous forme de structures conductrices sur la vitre d'un véhicule, dont les bornes sont connectées au module d'antenne en diversité (6) situé sur la vitre via des lignes de connexion, et **en ce que** la ligne haute-fréquence (4) constitue la seule liaison de signalisation au récepteur plus éloigné.

**13.** Installation d'antenne en diversité selon la revendication 1,
**caractérisée en ce que**

- dans l'un au moins des deux trajets de signal (15, 16), il existe un moyen de réglage de transmission de niveau (30) pour varier le niveau du signal de réception, et
- dans le moyen de commande électronique (11) à mémoire, une matrice de valeurs de transmission de niveau est stockée pour différentes valeurs discrètes de transmission de niveau (Pa, b, i, j, avec j = 1, 2, ..), en vue du réglage coordonné de différentes valeurs discrètes de transmission de niveau respectivement pour une combinaison d'une position de commutation déterminée (a = 0, 1, 2, .. N, b = 0, 1, 2, .. N) du sélecteur de signal (12) adressable et d'un angle de rotation de phase discret $\Phi$a, b, i, et
- à cette fin, un signal de réglage de transmission de niveau (31) est formé permettant de régler la valeur de transmission de niveau (Pa, b, i, j) correspondante dans le moyen de réglage de transmission de niveau (30).

**14.** Installation d'antenne en diversité selon la revendication 1,
**caractérisée en ce que**

- le moyen de rotation de phase (10) réglable est constitué par au moins deux organes de rotation de phase (35a, 35b) ayant des angles de phase réglés fermement et par un sélecteur de phase (33) pilotable agencé en aval pour la sélection alternative d'un des signaux de sortie des organes de rotation de phase (35a, 35b), et
- dans le moyen de commande (11) à mémoire, d'une part un signal est généré en tant que signal de réglage de phase (14) qui est amené au moyen de rotation de phase réglable par voie analogique pour régler l'angle de rotation de

phase discret $\Phi$a, b, i concerné respectif, et d'autre part un signal de réglage de commutation (13) logique correspondant est généré pour régler la position de commutation associée (a = 0, 1, 2, .. N, b = 0, 1, 2, .. N) du sélecteur de signal (12) adressable.

**15.** Installation d'antenne en diversité selon la revendication 14,
**caractérisée en ce que**
à la place des organes de rotation de phase (35a, 35b), un organe de rotation de phase (32) regroupé multi-étages ayant une pluralité de sorties est utilisé, qui comprend un sélecteur de phase (33) qui comprend en correspondance plusieurs étages et qui est agencé en aval.

**16.** Installation d'antenne en diversité selon la revendication 15,
**caractérisée en ce que**
les rotations de phase liées aux différents étages de l'organe de rotation de phase (32) multi-étages sont réglées de telle sorte que respectivement deux phases, optimisées à l'égard du gain en diversité, sont disponibles pour les combinaisons appariées possibles des antennes A1, A2, .. AN.

**17.** Installation d'antenne en diversité selon la revendication 14,
**caractérisée en ce que**
il existe deux organes de rotation de phase (35a, 35b) ayant des angles de phase réglés fermement ayant un sélecteur de phase (33) réalisé sous forme de commutateur inverseur, et **en ce que**
les angles de phase sont formés de telle sorte qu'il en résulte une valeur maximale du gain en diversité pour des valeurs moyennes de toutes les positions du sélecteur de signal (12) adressable et du sélecteur de phase (33), à une fréquence donnée.

**18.** Installation d'antenne en diversité selon la revendication 17,
**caractérisée en ce que**
les deux organes de rotation de phase (35a, 35b) sont réalisés sous forme de circuits de réactance haute-fréquence à faible perte, et l'interdépendance en fréquence de leurs phases est conçue de manière à maximiser le gain en diversité à chaque fréquence.

**19.** Installation d'antenne en diversité selon la revendication 18 en association avec les revendications 10 et 11,
**caractérisée en ce que**
les organes de transformation (29a, 29b) présents dans l'amplificateur d'antenne (21a, 21b) ayant une extrémité frontale d'amplification (22a, 22b) à haute valeur ohmique du côté entrée, dans les deux trajets de signal (15, 16), sont en supplément réalisés de telle sorte que les relations de phase requises pour la maximisation s'établissent aux entrées de l'organe de sommation (9).

20. Installation d'antenne en diversité selon la revendication 18,
**caractérisée en ce que**

   - les deux organes de rotation de phase (35a, 35b) possèdent les valeurs de phase de 0° et de 180°,
   - un organe inverseur actif ou passif (38) est utilisé à des coûts faibles, et
   - il existe en supplément un organe de rotation de phase de base (37) dont la phase est formée en fonction de la fréquence pour un gain en diversité maximisé.

21. Installation d'antenne en diversité selon la revendication 1,
**caractérisée en ce que**
des organes de correction d'amplitude (36) sont intégrés dans les antennes A1, A2, .. AN ou dans les lignes d'alimentation d'antenne (2a), qui compensent des écarts des moyennes azimutales des diagrammes de rayonnement des antennes A1, A2, ..AN.

22. Installation d'antenne en diversité selon la revendication 1,
**caractérisée en ce que**
au moins un moyen de rotation de phase (10) réglé fermement est intégré dans le trajet de signal (14a) côté entrée pour la rotation de l'angle de phase d'un signal d'antenne dans la ligne d'alimentation vers le sélecteur de signal (12) logique adressable.

23. Installation d'antenne en diversité selon la revendication 22,
**caractérisée en ce que**
en présence de N antennes, des organes de rotation de phase (10) réglés fermement sont intégrés dans les N-1 lignes d'alimentation vers le sélecteur de signal (12) logique adressable, qui sont réalisés sous forme d'organes de rotation de phase (35a, 35b, 35c) et de circuits à réactance HF à faible perte, de telle sorte que la dépendance en fréquence de leurs valeurs de phase procure le plus grand gain en diversité possible respectif à chaque fréquence.

Fig. 1

Fig. 2

A1

A2

A3

AN

5a

5b

7a    15

7b

16

6    3

9

8    20

1

20

10

14

11    18    17

12    13

2

EP 1 763 151 B1

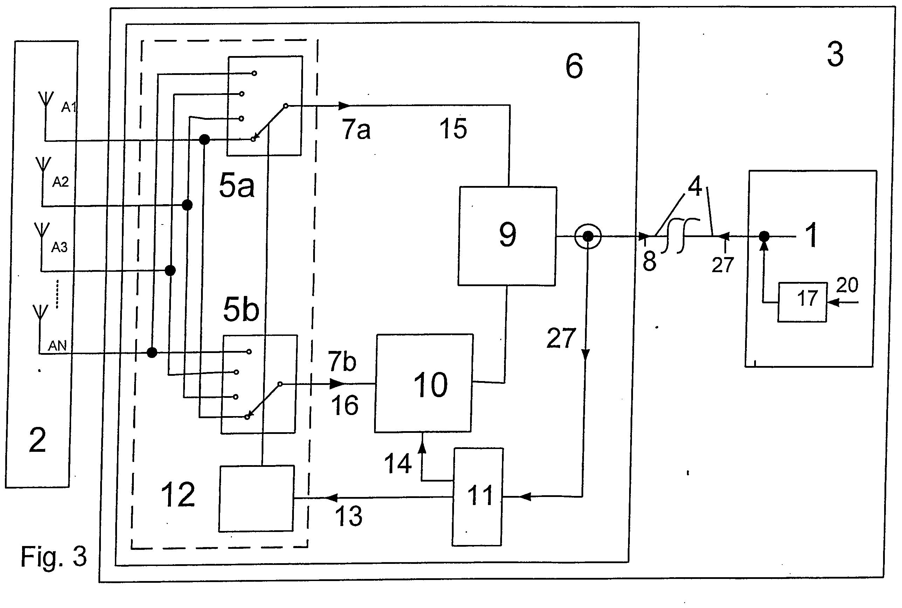

Fig. 3

Fig. 4

EP 1 763 151 B1

Fig. 5

Fig. 6

Fig. 8

A2   A1   A3   A4

2a                    2a

6

2 Sammelschienen

2 Kreuzleiter

a)

A1   A2   A3   A4   2a

6

b)

Fig.9

EP 1 763 151 B1

Fig. 10

Fig.11

Fig.12

Fig. 13

EP 1 763 151 B1

Anzahl der dekorrelierten Signale

Frequenz in MHz

a)

Mittelwerte

1)  2,3

2)  3,1

3)  4,8

Anzahl der dekorrelierten Signale

Frequenz in MHz

b)

Mittelwerte

1)  2,3

2)  3,9

3)  4,8

Fig. 14

EP 1 763 151 B1

Anzahl der dekorrelierten Signale

3)

2)

1)

Frequenz in MHz

a)

Mittelwerte

1) 2,3

2) 4,2

3) 4,9

Optimaler Phasengang des einzigen Filters in Grad

Frequenz in MHz

b)

Fig. 15

EP 1 763 151 B1

Anzahl der dekorrelierten Signale

Frequenz in MHz

a)

Mittelwerte

1) 2,3

2) 4,7

3) 4,8

Optimaler Phasengang der Phasendrehglieder in Grad

35a

35b

Frequenz in MHz

b)   Fig. 16

Fig. 18

a)

Fig. 17

b)

Anzahl der dekorrelierten Signale

C ———→

Fig. 7

**Fig. 19**

Fig.20

Anzahl der dekorrielerten Signale

Frequenz in MHz

Fig.21

EP 1 763 151 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19607045
- EP 1126631 A
- EP 0877440 A1
- DE 4321805 A1

**In der Beschreibung aufgeführte Nicht-Patentliteratur**

- **H. LINDENMEIER et al.** *SAE Technical Paper Series 981147,* ISSN 148-7191